# EUROPÄISCHE PATENTSCHRIFT

(11) **EP 2 089 317 B1**
(45) Veröffentlichungstag und Bekanntmachung des Hinweises auf die Patenterteilung: **02.12.2015**
(21) Anmeldenummer: 07818283.9
(22) Anmeldetag: 20.09.2007
(51) Int. Cl.: C01B 31/02, B82Y 30/00, B82Y 40/00

(54) **DISPERGIERVERFAHREN**
DISPERSION METHOD
PROCÉDÉ DE DISPERSION

(30) Priorität: 14.11.2006 DE 102006053816; 21.11.2006 DE 102006055106
(43) Veröffentlichungstag der Anmeldung: 19.08.2009
(60) Teilanmeldung: 12003939.1
(73) Patentinhaber: BYK-Chemie GmbH, 46483 Wesel (DE)
(72) Erfinder: BERKEI, Michael, 45721 Haltern am See (DE); NOLTE, Ulrich, 47533 Kleve (DE); SAWITOWSKI, Thomas, 45133 Essen (DE); PRITSCHINS, Wolfgang, 46487 Wesel (DE)
(74) Vertreter: Von Rohr Patentanwälte Partnerschaft mbB
(86) Internationale Anmeldenummer: PCT/EP2007/008193
(87) Internationale Veröffentlichungsnummer: WO 2008/058589

(56) Entgegenhaltungen:
- EP-A- 0 270 126
- EP-A- 0 318 999
- EP-A- 0 417 490
- EP-A- 1 359 121
- EP-A- 1 593 700
- WO-A-2007/011369
- JP-A- 2005 089 738
- JP-A- 2007 169 120

## Beschreibung

Die vorliegende Erfindung betrifft ein Verfahren zum Dispergieren von Kohlenstoffnanoröhren (CNTs) in einer kontinuierlichen Phase, insbesondere in mindestens einem Dispersionsmittel, sowie die auf diese Weise erhältlichen Dispersionen selbst und deren Verwendung.

Kohlenstoffnanoröhren, synonym auch als Kohlenstoffnanotubes (engl. carbon nanotubes = CNTs) etc. bezeichnet, sind mikroskopisch kleine röhrenförmige Gebilde (d. h. molekulare Nanoröhren) aus Kohlenstoff. Ihre Wände bestehen - wie die der Fullerene oder wie die Ebenen des Graphits - im wesentlichen ausschließlich aus Kohlenstoff, wobei die Kohlenstoffatome eine wabenartige Struktur mit Sechsecken und jeweils drei Bindungspartnern einnehmen, welche durch die sp²-Hybridisierung der Kohlenstoffatome vorgegeben ist.

Kohlenstoffnanoröhren leiten sich somit von den Kohlenstoffebenen des Graphits ab, welche sozusagen zu einer Röhre aufgerollt sind: Die Kohlenstoffatome bilden eine wabenartige, hexagonale Struktur mit jeweils drei Bindungspartnern. Röhren mit ideal hexagonaler Struktur haben eine einheitliche Dicke und sind linear; es sind aber auch geknickte oder sich verengende Röhren möglich, die fünfeckige Kohlenstoffringe enthalten. Je nachdem, wie das Wabennetz des Graphits zur Röhre gerollt wird ("gerade" oder "schräg"), entstehen helikale (d. h. schraubenartig gewundene) und auch nichtspiegelsymmetrische, also chirale Strukturen.

Man unterscheidet zwischen einwandigen Kohlenstoffnanoröhren (engl. single-wall carbon nanotubes = SWCNTs bzw. SWNTs) und mehrwandigen Kohlenstoffnanoröhren (engl. multiwall carbon nanotubes = MWCNTs bzw. MWNTs), zwischen offenen oder geschlossenen Kohlenstoffnanoröhren (d. h. mit einem "Deckel", der z. B. einen Ausschnitt aus einer Fullerenstruktur hat) sowie zwischen leeren und gefüllten (beispielsweise mit Silber, flüssigem Blei, Edelgasen etc.) Kohlenstoffnanoröhren.

Der Durchmesser der Kohlenstoffnanoröhren (CNTs) liegt im Bereich von wenigen Nanometern (z. B. 1 bis 50 nm), aber es wurden auch schon Kohlenstoffnanoröhren (CNTs) mit Durchmessern der Röhren von nur 0,4 nm hergestellt. Längen von mehreren Mikrometern bis Millimetern für einzelne Röhren und bis zu einigen Zentimetern für Röhrenbündel wurden bereits erreicht.

Je nach Detail der Struktur ist die elektrische Leitfähigkeit innerhalb der Kohlenstoffnanoröhren metallisch oder halbleitend. Es sind auch Kohlenstoffnanoröhren bekannt, welche bei tiefen Temperaturen supraleitend sind.

Es wurden bereits Transistoren und einfache Schaltungen mit halbleitenden Kohlenstoffnanoröhren hergestellt. Auch wurde bereits versucht, komplexe Schaltkreise aus verschiedenen Kohlenstoffnanoröhren gezielt herzustellen.

Die mechanischen Eigenschaften von Kohlenstoffnanoröhren sind überragend: CNTs haben - bei einer Dichte von z. B. 1,3 bis 1,4 g/cm³ - eine enorme Zugfestigkeit von mehreren Megapascal; im Vergleich hierzu hat Stahl bei einer Dichte von mindestens 7,8 g / cm³ eine maximale Zugfestigkeit von nur etwa 2 MPa, woraus sich für einzelne CNTs rechnerisch ein mindestens 135mal besseres Verhältnis von Zugfestigkeit zu Dichte als für Stahl ergibt.

Für den Bereich der Elektronik sind vor allem die Strombelastbarkeit und die elektrische wie Wärmeleitfähigkeit interessant: Die Strombelastbarkeit liegt schätzungsweise 1000mal höher als bei Kupferdrähten, während die Wärmeleitfähigkeit bei Raumtemperatur beinahe doppelt so hoch wie die von Diamant ist. Da CNTs auch Halbleiter sein können, lassen sich aus ihnen hervorragende Transistoren fertigen, die höhere Spannungen und Temperaturen - und damit höhere Taktfrequenzen- als Siliziumtransistoren aushalten; funktionsfähige Transistoren aus CNTs wurden bereits hergestellt. Des weiteren können mit Hilfe von CNTs nichtflüchtige Speicher realisiert werden. Auch können CNTs im Bereich der Meßtechnik (z. B. Rastertunnelmikroskope) verwendet werden.

Aufgrund ihrer mechanischen und elektrischen Eigenschaften können Kohlenstoffnanoröhren auch in Kunststoffen Anwendung finden: Dadurch werden beispielsweise die mechanischen Eigenschaften der Kunststoffe stark verbessert. Außerdem ist es möglich, auf diese Weise elektrisch leitende Kunststoffe herzustellen.

Kohlenstoffnanoröhren (CNTs) sind kommerziell verfügbar und werden von verschiedenen Herstellern angeboten (z. B. von der Bayer MaterialScience AG, Deutschland, der CNT Co. Ltd., China, der Cheap Tubes Inc., USA, und der Nanocyl S.A., Belgien). Entsprechende Herstellungsverfahren sind dem Fachmann geläufig. So lassen sich Kohlenstoffnanoröhren (CNTs) beispielsweise durch Lichtbogenentladung z. B. zwischen Kohlenstoffelektroden, ausgehend von Graphit mittels Laserabtragung ("Verdampfen") oder durch katalytische Zersetzung von Kohlenwasserstoffen (engl, *chemical vapor deposition,* kurz CVD) herstellen.

Die zuvor beschriebenen Eigenschaften der Kohlenstoffnanoröhren (CNTs) und die hieraus erwachsenden Anwendungsmöglichkeiten haben ein großes Interesse hervorgerufen. Insbesondere besteht für eine Reihe von Anwendungen ein Bedarf, die Kohlenstoffnanoröhren (CNTs) in gut handhabbarer Form, vorzugsweise in Form von Dispersionen, zur Verfügung zu stellen.

Das Dispergieren von Kohlenstoffnanoröhren (CNTs) stellt eine große Herausforderung dar, da die Kohlenstoffnanoröhren (CNTs) sich nur sehr schwer in stabile Dispersionen überführen lassen, insbesondere weil die Kohlenstoffnanoröhren (CNTs) über ein sehr großes Aspektverhältnis verfügen und stark agglomeriert und/oder verknäult vorliegen. '

Daher hat es im Stand der Technik nicht an Versuchen gefehlt, Kohlenstoffnanoröhren (CNTs) stabil zu dispergieren. Die aus dem Stand der Technik bekannten Verfahren sind aber nur wenig geeignet, um stabile und konzentrierte Dispersionen von Köhlenstoffnanoröhren (CNTs) zu erzeugen; Meist führen die Verfahren des Standes der Technik nicht zu lagerstabilen Dispersionen, und zudem ist in den meisten Fällen die Konzentration an Kohlenstoffnanoröhren (CNTs) in den Dispersionen des Standes der Technik nur äußerst gering.

So zielen einige Verfahren des Standes der Technik darauf ab, durch eine aufwendige vorangehende Vorbehandlung zunächst die Oberfläche der zu dispergierenden Kohlenstoffnanoröhren (CNTs) zu modifizieren, insbesondere polar auszustatten, um die nachfolgende Dispergierung zu erleichtern. Für die Modifizierung der Kohlenstoffnanoröhren (CNTs) geeignete Verfahren sind beispielsweise oxidative Prozesse, insbesondere chemische Vorbehandlung, Halogenierung oder andere Polarisierungsprozesse zur Modifizierung der Oberflächen der Kohlenstoffnanoröhren (CNTs). Ein derartiges Verfahren, welches beispielsweise eine vorangehende Fluorierung der Oberflächen der Kohlenstoffnanoröhren (CNTs) vor deren Dispergierung vorsieht, ist beispielsweise in der US 6 827 918 B2 beschrieben.

Nachteilig bei diesen Verfahren ist die aufwendige Vorbehandlung, die insbesondere bei großtechnischer Umsetzung zu einer erschwerten Durchführung des Verfahrens mit deutlich höheren Kosten führt.

Auch sind im Stand der Technik Verfahren beschrieben worden, welche die Kohlenstoffnanoröhren in Gegenwart eines wasserlöslichen Polymermaterials in wäßrige Dispersionen überführen (vgl. z. B. US 2004/0131859 A1 und WO 02/076888 A1). Diese Verfahren haben aber den Nachteil, daß sie zum einen nicht universell einsetzbar sind, sondern auf wäßrige Dispersionsmittel bzw. wäßrige Dispersionsmedien beschränkt sind, und zum anderen, daß sie nur zu Dispersionen mit relativ geringen Gehalten an Kohlenstoffnanoröhren (CNTs) führen. Vorherrschende Zielsetzung der beiden vorgenannten Druckschriften ist vielmehr die Überführung der dort beschriebenen Dispersionen in ein redispergierbares Pulver von Kohlenstoffnanoröhren (CNTs).

Die zuvor beschriebenen Verfahren des Standes der Technik resultieren zumeist in inhomogenen, oftmals nicht langzeitstabilen Dispersionen von Kohlenstoffnanoröhren (CNTs) mit geringen Konzentrationen bzw. Gehalten von CNTs. Weiterhin zeigen die Dispersionen des Standes der Technik - im Vergleich zum reinen Dispersionsmittel bzw. Dispersionsmedium - einen hohen bis extremen Anstieg in der Viskosität bei zugleich nur geringen Partikelgehalten von Kohlenstoffnanoröhren (CNTs) von nur bis zu ca. 1 Gew.-%.

Diese Dispersionen des Standes der Technik sind in bezug auf eine industrielle Umsetzung mit großem Nachteil verbunden, so daß eine erhöhte Nachfrage nach verbesserten Dispersionen von Kohlenstoffnanoröhren (CNTs) in verschiedenen Medien besteht.

Die Druckschrift EP 1 359 121 A2 betrifft ein Polymer und ein Verfahren zur Verwendung dieses Polymers, insbesondere ein Verfahren zum Solubilisieren von Nanoröhren, wie Kohlenstoffnanoröhren, wobei zunächst ein Polymer mit den Nanoröhren in Kontakt gebracht wird und nichtkovalent hieran angebunden wird, ohne die Nanoröhren zu umwickeln, wobei das betreffende Polymer mindestens einen funktionellen Teil zur Solubilisierung der Nanoröhren aufweist.

Weiterhin betrifft die Druckschrift JP 2005-089738 A das Lösen bzw. Solubilisieren von Nanoröhren, insbesondere Kohlenstoffnanoröhren, in Gegenwart eines Lösemittels und eines konjugierten, an die Kohlenstoffnanoröhren angebundenen Polymers.

Schließlich betreffen die auf die Anmelderin zurückgehenden Druckschriften EP 1 593 700 A1, EP 0 318 999 A2, EP 0 270 126 A2 und EP 0 417 490 A2 ganz allgemein Dispergiermittel und Dispersionsstabilisatoren.

Der vorliegenden Erfindung liegt daher die Aufgabe zugrunde, ein Verfahren zur Herstellung von Dispersionen von Kohlenstoffnanoröhren (CNTs) bereitzustellen, wobei insbesondere die zuvor geschilderten, mit dem Stand der Technik verbundenen Nachteile zumindest weitgehend vermieden oder aber wenigstens abgeschwächt werden sollen.

Eine weitere Aufgabe der vorliegenden Erfindung ist die Bereitstellung von Dispersionen von Kohlenstoffnanoröhren (CNTs) mit im Vergleich zu den entsprechenden Dispersionen des Standes der Technik verbesserten Eigenschaften, insbesondere mit erhöhten Lagerstabilitäten und/oder mit höheren Gehalten an Kohlenstoffnanoröhren (CNTs), vorzugsweise bei guter Handhabbarkeit, wie guter Fließfähigkeit etc.

Die Anmelderin hat nun überraschenderweise gefunden, daß die zuvor geschilderte Problemstellung in effizienter Weise gelöst werden kann, wenn die Kohlenstoffnanoröhren (CNTs) in einer kontinuierlichen Phase, insbesondere in mindestens einem Dispersionsmittel, in Gegenwart mindestens eines Dispergiermittels (Dispergators) unter Einbringung eines für die Dispergierung ausreichenden Energieeintrags in Dispersion gebracht werden.

In vollkommen überraschender Weise wurde nun nämlich gefunden, daß durch die Kombination eines geeigneten Dispergiermittels (Dispergators) in Zusammenwirken mit hohen Energieeinträgen, insbesondere hohen Scherkräften, ein schonendes und kostengünstiges Verfahren bereitgestellt werden kann, um Kohlenstoffnanoröhren (CNTs) in deutlich höheren Konzentrationen und in einer Vielzahl von Dispersionsmitteln bzw. Dispersionsmedien stabil zu dispergieren.

Zur Lösung des zuvor geschilderten Problems schlägt die vorliegende Erfindung somit ein Dispergierverfahren nach Anspruch 1 vor. Weitere, vorteilhafte Eigenschaften des erfindungsgemäßen Verfahrens sind Gegenstand der diesbezüglichen Verfahrensunteransprüche.

Weiterer Gegenstand der vorliegenden Erfindung sind die nach dem erfindungsgemäßen Verfahren erhältlichen Dispersionen von Kohlenstoffnanoröhren (CNTs), wie sie in den entsprechenden, auf die Dispersionen selbst gerichteten Ansprüchen beschrieben bzw. definiert sind.

Schließlich ist ein weiterer Gegenstand der vorliegenden Erfindung die Verwendung der nach dem erfindungsgemäßen Verfahren erhältlichen Dispersionen von Kohlenstoffnanoröhren (CNTs), wie sie in den entsprechenden Verwendungsansprüchen beschrieben bzw. definiert ist.

Gegenstand der vorliegenden Erfindung - gemäß einem **ersten** Aspekt der vorliegenden Erfindung - ist somit ein Verfahren zum Dispergieren von Kohlenstoffnanoröhren (CNTs) in einer kontinuierlichen Phase, insbesondere in mindestens einem Dispersionsmittel, d, h. also ein Verfahren zum Herstellen von Dispersionen von Kohlenstoffnanoröhren (CNTs) in einer kontinuierlichen Phase, insbesondere in mindestens einem Dispersionsmittel,
wobei zunächst vor dem eigentlichen Dispergiervorgang ein Verfahrensschritt durchgeführt wird, bei dem die Kohlenstoffnanoröhren (CNTs) mit einer kontinuierlichen Phase, insbesondere einem Dispersionsmittel und mindestens einem Dispergiermittel (Dispergator) in Kontakt gebracht und homogenisiert werden und
wobei nachfolgend die Kohlenstoffnanoröhren (CNTs) in der kontinuierlichen Phase, insbesondere dem Dispersionsmittel, in Gegenwart des Dispergiermittels unter Einbringung eines für die Dispergierung ausreichenden Energieeintrags in Mengen von 1 · 10⁻¹ bis 30 Gew.-%, bezogen auf die resultierende Dispersion, dispergiert werden, wobei die eingetragene Energiemenge, berechnet als eingetragene Energie pro Menge an zu dispergierenden Kohlenstoffnanoröhren (CNTs), 15.000 bis 100.000 kJ/kg beträgt.

Zum Begriff der Dispersion, wie er im Rahmen der vorliegenden Erfindung verwendet wird, kann insbesondere auf DIN 53900 vom Juli 1972 verwiesen werden, wonach der Begriff der Dispersion eine Bezeichnung für ein System (d. h. disperses System) aus mehreren Phasen ist, von denen eine Phase kontinuierlich ausgebildet ist (nämlich das Dispersionsmittel oder Dispersionsmedium) und mindestens eine weitere Phase feinverteilt ist (nämlich die dispergierte Phase oder das Dispergens, hier: die Kohlenstoffnanoröhren). Im Rahmen der vorliegenden Erfindung wird der Begriff der Dispersion ausschließlich zur Bezeichnung von Suspensionen) d. h. Dispersionen von unlöslichen Feststoffteilchen in Flüssigkeiten, bezeichnet.

Der Begriff des Dispergiermittels - synonym auch als Dispergator, Dispergieradditiv, Netzmittel etc. bezeichnet -, wie er im Rahmen der vorliegenden Erfindung verwendet wird, bezeichnet im allgemeinen Substanzen, welche das Dispergieren von Teilchen in einem Dispersionsmittel bzw. Dispersionsmedium erleichtern, insbesondere indem die Grenzflächenspannung zwischen den beiden Komponenten - zu dispergierende Teilchen einerseits und Dispergiermittel andererseits - erniedrigt wird, also eine Benetzung herbeigeführt wird. Infolgedessen sind eine Vielzahl von synonymen Bezeichnungen für Dispergiermittel (Dispergatoren) in Gebrauch, z. B. Dispergieradditiv, Absetzverhinderungsmittel, Netzmittel, Detergens, Suspendier- bzw. Dispergierhilfsmittel, Emulgator etc. Der Begriff des Dispergiermittels ist nicht zu verwechseln mit dem Begriff des Dispersionsmittels, weil letzteres die kontinuierliche Phase der Dispersion (d. h. das flüssige, kontinuierliche Dispersionsmedium) bezeichnet. Im Rahmen der vorliegenden Erfindung dient das Dispergiermittel zudem auch dem Zweck, die dispergierten Partikel (d. h. die Kohlenstoffnanoröhren) zu stabilisieren, d. h. stabil in Dispersion zu halten, und in effizienter Weise deren Reagglomeration zu vermeiden bzw. wenigstens zu minimieren; dies wiederum führt zu den gewünschten Viskositäten der resultierenden Dispersionen, da auf diese Weise in der Praxis gut handhabbare, fließfähige Systeme resultieren - und dies selbst bei hohen Konzentrationen der dispergierten Kohlenstoffnanoröhren. Ohne die Verwendung des Dispergiermittels dagegen würde infolge einer unerwünschten Reagglomeration der dispergierten CNTs ein derartiger Viskositätsanstieg der erhaltenen Dispersionen resultieren, daß - zumindest bei höheren CNT-Konzentrationen - in der Praxis nicht mehr handhabbare, da zu hochviskose bzw. zu geringfügig fließfähige Systeme resultieren würden.

Für weitergehende Einzelheiten zu den Begriffen "Dispergens", "Dispergieren", "Dispergiermittel", "Disperse Systeme" und "Dispersion" kann beispielsweise auf Römpp Chemielexikon, 10. Auflage, Georg Thieme Verlag, Stuttgart/New York, Band 2, 1997, Seiten 1014/1015, sowie die dort referierte Literatur, deren gesamter Offenbarungsgehalt bzw. Inhalt hiermit durch Bezugnahme eingeschlossen ist, verwiesen werden.

Eine Besonderheit des erfindungsgemäßen Verfahrens ist darin zu sehen, daß erfindungsgemäß der Dispergiervorgang unter ausreichendem Energieeintrag (z. B. Scherenergieeintrag) erfolgt, wobei die eingetragene Energie einerseits ausreichend sein muß, um die für die Dispergierung erforderliche Energie bereitzustellen, insbesondere die von den Kohlenstoffnanoröhren (CNTs) gebildeten Agglomerate, Konglomerate, Knäuel etc. aufzubrechen, aber andererseits einen gewissen Wert nicht überschreiten darf, oberhalb dessen eine Zerstörung der Kohlenstoffnanoröhren (CNTs) einsetzt - und dies in Gegenwart eines geeigneten Dispergiermittels (Dispergators), welches imstande ist, die einzelnen Kohlenstoffnanoröhren (CNTs) zu stabilisieren und eine erneute Reagglomerierung zu verhindern und zum anderen die nachfolgende Dispergierung zu erleichtern und auf diese Weise die resultierenden Dispersionen zu stabilisieren.

Mit dem erfindungsgemäßen Verfahren lassen sich in überraschender Weise relativ hohe Konzentrationen an Kohlenstoffnanoröhren (CNTs) in den resultierenden Dispersionen erhalten. Insbesondere lassen sich mit dem erfindungsgemäßen Verfahren Dispersionen mit Feststoffgehalten an Kohlenstoffnanoröhren (CNTs) von 5 Gew.-% und mehr, bezogen auf die resultierenden Dispersionen, herstellen. Im allgemeinen werden die Kohlenstoffnanoröhren (CNTs) in Mengen von 1 · 10⁻¹ bis 30 Gew.-%, insbesondere 1 · 10⁻¹ bis 20 Gew.-%, vorzugsweise 1 · 10⁻¹ bis 10 Gew.-%, besonders bevorzugt 1 · 10⁻¹ bis 7,5 Gew.-%, ganz besonders bevorzugt 1 · 10⁻¹ bis 5 Gew.-%, bezogen auf die resultierenden Dispersionen, in der kontinuierlichen Phase dispergiert.

Um eine wirtschaftlich sinnvolle Anwendung zu ermöglichen, sollte das erfindungsgemäße Verfahren innerhalb eines gewissen bzw. relativ kurzen Zeitraums durchgeführt bzw. abgeschlossen sein, was wiederum einen bestimmten Energieeintrag pro Zeiteinheit erfordert. Im allgemeinen wird das erfindungsgemäße Verfahren bzw. der Dispergiervorgang in einer Zeitdauer von 0,01 bis 30 Minuten, insbesondere 0,1 bis 20 Minuten, vorzugsweise 0,2 bis 15 Minuten, besonders bevorzugt 0,5 bis 10 Minuten, ganz besonders bevorzugt 0,5 bis 5 Minuten, durchgeführt. Dennoch kann es einzelfallbedingt oder anwendungsbezogen erforderlich sein, von den vorgenannten Werten abzuweichen, ohne daß der Rahmen der vorliegenden Erfindung verlassen ist.

Wie zuvor geschildert, muß zur Durchführung des Dispergiervorgangs ein ausreichender Energieeintrag in das Dispersionsmedium erfolgen, welcher einerseits ausreichend sein muß, um eine zuverlässige Dispergierung der Kohlenstoffnanoröhren (CNTs) zu gewährleisten, und andererseits nicht derart hoch sein darf, daß eine Zerstörung der Kohlenstoffnanoröhren (CNTs) bzw. ihrer Strukturen eintritt.

Die Bereitstellung des erforderlichen Energieeintrags erfolgt vorzugsweise mittels Ultraschallbehandlung. Dennoch sind auch andere Möglichkeiten im Rahmen der vorliegenden Erfindung realisierbar, beispielsweise die Anwendung von Hochdruckdüsen, obwohl die Behandlung mittels Ultraschall erfindungsgemäß bevorzugt ist.

Im allgemeinen kann die eingetragene Energiemenge in weiten Bereichen variieren. Insbesondere beträgt die eingetragene Energiemenge, berechnet als eingetragene Energie pro Menge an zu dispergierenden Kohlenstoffnanoröhren (CNTs), 15.000 bis 100.000 kJ/kg, besonders bevorzugt 25.000 bis 50.000 kJ/kg. Dennoch kann es anwendungsbezogen oder einzelfallbedingt erforderlich sein, von den vorgenannten Werten abzuweichen, ohne daß der Rahmen der vorliegenden Erfindung verlassen ist.

Dem eigentlichen Dispergiervorgang geht ein Verfahrensschritt voraus, bei dem die nachfolgend zu dispergierenden Kohlenstoffnanoröhren (CNTs) mit der kontinuierlichen Phase, insbesondere mit dem Dispersionsmittel, und dem Dispergiermittel (Dispergator) sowie gegebenenfalls weiteren Bestandteilen bzw. Inhaltsstoffen der Dispersion in Kontakt gebracht und miteinander homogenisiert werden, insbesondere unter entsprechendem Energieeintrag, vorzugsweise unter Rühren. Der hierfür erforderliche Energieeintrag ist jedoch geringer als für den Dispergiervorgang als solchen, so daß ein üblicher Rühr- bzw. Mischvorgang hierfür ausreichend ist.

Im allgemeinen wird das erfindungsgemäße Verfahren bei Temperaturen unterhalb der Siedetemperatur der kontinuierlichen Phase, insbesondere des Dispersionsmittels, durchgeführt. Vorzugsweise wird das erfindungsgemäße Verfahren bei Temperaturen im Bereich von 10 bis 100 °C, vorzugsweise 15 bis 70 °C, durchgeführt. Dabei kann es gegebenenfalls erforderlich werden, den Dispergiervorgang unter Kühlen durchzuführen, da durch den Energieeintrag eine Erwärmung der resultierenden Dispersion eintritt.

Wie zuvor geschildert, ist ein Vorteil der vorliegenden Erfindung darin zu sehen, daß der Dispergiervorgang ohne vorangehende Vorbehandlung der zu dispergierenden Kohlenstoffnanoröhren (CNTs), insbesondere ohne vorangehende Oxidation, chemische Behandlung (z. B. mit Oxidationsmitteln, wie Salpetersäure, Ozon etc.), thermische Behandlung, Polarisierung, Halogenierung oder dergleichen, durchgeführt wird.

Im Rahmen des erfindungsgemäßen Verfahrens lassen sich nahezu beliebige Kohlenstoffnanoröhren (CNTs) einsetzen, wie sie nach aus dem Stand der Technik bekannten Verfahren hergestellt werden können oder aber als handelsübliche Produkte erhältlich sind (z. B. von der Bayer MaterialScience AG, Leverkusen).

Die erfindungsgemäß eingesetzten Kohlenstoffnanoröhren (CNTs) können beispielsweise einwandige Kohlenstoffnanoröhren (Single-Wall Carbon Nanotubes = SWCNT bzw. SWNT) oder mehrwandige Kohlenstoffnanoröhren (Multi-Wall Carbon Nanotubes = MWCNT bzw. MWNT), insbesondere 2- bis 30wandige, vorzugsweise 3- bis 15wandige Kohlenstoffnanoröhren, sein.

Die erfindungsgemäß eingesetzten Kohlenstoffhanoröhren (CNTs) können mittlere Innendurchmesser von 0,4 bis 50 nm, insbesondere 1 bis 10 nm, vorzugsweise 2 bis 6 nm, und/oder mittlere Außendurchmesser von 1 bis 60 nm, insbesondere 5 bis 30 nm, vorzugsweise 10 bis 20 nm, aufweisen. Die erfindungsgemäß eingesetzten Kohlenstoffnanozöhren (CNTs) können mittlere Längen von 0,01 bis 1.000 µm, insbesondere 0,1 bis 500 µm, vorzugsweise 0,5 bis 200 µm, besonders bevorzugt 1 bis 100 µm, aufweisen.

Ferner können die erfindungsgemäß eingesetzten Kohlenstoffnanoröhren (CNTs) eine Zugfestigkeit pro Kohlenstoffnanoröhre von mindestens 1 GPa, insbesondere mindestens 5 GPa, bevorzugt mindestens 10 GPa, und/oder einen Elastizitätsmodul pro Kohlenstoffnanoröhre von mindestens 0,1 TPa, insbesondere mindestens 0,5 TPa, bevorzugt mindestens 1 TPa, und/oder eine thermische Leitfähigkeit von mindestens 500 W/mK, insbesondere mindestens 1.000 W/mK, bevorzugt mindestens 2.000 W/mK, und/oder eine elektrische Leitfähigkeit von mindestens 10³ S/cm, insbesondere mindestens 0,5 · 10⁴ S/cm, bevorzugt mindestens 10⁴ S/cm, aufweisen.

Üblicherweise eingesetzte Kohlenstoffnanoröhren (CNTs) weisen eine Schüttdichte im Bereich von 0,01 bis 0,3 g/cm³, insbesondere 0,02 bis 0,2 g/cm³, vorzugsweise 0,1 bis 0,2 g/cm³, auf und liegen als Agglomerate bzw. Konglomerate einer Vielzahl von Kohlenstoffnanoröhren (CNTs), insbesondere in stark verknäulter Form, vor.

Erfindungsgemäß geeignete Kohlenstoffnanoröhren (CNTs) sind handelsverfügbar, beispielsweise über die Bayer MaterialScience AG, Leverkusen, beispielsweise die Produktserie Baytubes^{®} (z. B. Baytubes^{®} C 150 P).

Was die kontinuierliche Phase bzw. das Dispersionsmittel (Dispersionsmedium) anbelangt, so können im Rahmen der vorliegenden Erfindung grundsätzlich wäßrig basierte, organisch basierte oder wäßrig-organisch basierte Dispersionsmittel zum Einsatz kommen, wobei organische Dispersionsmittel bevorzugt eingesetzt werden. Üblicherweise wird als kontinuierliche Phase ein unter Dispergierbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Dispersionsmittel eingesetzt.

In erfindungsgemäß bevorzugter Weise wird als kontinuierliche Phase ein Dispersionsmittel eingesetzt, welches ausgewählt wird aus der Gruppe (i) Alkoholen, insbesondere geradkettigen, verzweigten oder cyclischen, einwertigen oder mehrwertigen Alkoholen, wie Methanol, Ethanol, Butanol, Ethylhexanol, Dekanol, Isotridecylalkohol, Benzylalkohol, Propargylalkohol, Oleylalkohol, Linoleylalkohol, Oxoalkoholen, Neopentylalkohol, Cyclohexanol, Fettalkoholen und Di- und Polyolen, wie Glykolen; (ii) Etheralkoholen, wie 2-Methoxyethanol, Monophenyldiglykol, Phenylethanol, Ethylenglykol und Propylenglykol; (iii) Kohlenwasserstoffen, wie Toluol, Xylol und aliphatischen und/oder cyloaliphatischen Henzinfraktionen, chlorierten Kohlenwasserstoffen, wie Chloroform und Trichlorethan; (iv) Ethern, insbesondere cyclischen und acyclischen Ethern, wie Dioxan, Tetrahydrofuran und Polyalkylenglykoldialkylethern; (v) Carbonsäureestern, insbesondere Monocarbonsäureestern, wie Ethylacetat und Butylacetat, und Di- oder Polycarbonsäureestern, wie Dialkylestem von C₂- bis C₄-Dicarbonsäuren ("Dibasic Esters"); (vi) Etherestern, insbesondere Alkylglykolestern, wie Ethylglykolacetat und Methoxypropylacetat; (vii) Lactonen, wie Butyrolacton; (viii) Weichmachern, insbesondere Phthalaten; (ix) Aldehyden und Ketonen, wie Methylisobutylketon, Cyclohexanon und Aceton; (x) Säureamiden, wie Dimethylformamid; (xi) N-Methylpyrrolidon; sowie Mischungen der vorgenannten Dispersionsmittel.

Darüber hinaus können grundsätzlich auch ionische Flüssigkeiten oder sogenannte superkritische Flüssigkeiten ("*supercritical fluids*") als Dispersionsmittel bzw. Dispersionsmedium zum Einsatz kommen. Auch Wasser kommt im Rahmen der vorliegenden Erfindung als Dispersionsmittel in Betracht.

Was das erfindungsgemäß eingesetzte Dispergiermittel anbelangt, so handelt es sich insbesondere um ein polymeres Dispergiermittel, insbesondere ein polymeres Dispergiermittel auf Basis eines funktionellen Polymers, vorzugsweise mit einer zahlenmittleren Molekularmasse von mindestens 500 g/mol, vorzugsweise mindestens 1.000 g/mol, bevorzugt mindestens 2.000 g/mol. Insbesondere kann das erfindungsgemäß eingesetzte Dispergiermittel ausgewählt sein aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder gegebenenfalls versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Mischungen.

Darüber hinaus können als erfindungsgemäß geeignete Dispergiermittel grundsätzlich alle dem Fachmann zu diesem Zweck bekannten Netzmittel, Tenside, Dispergiermittel etc. verwendet werden.

In erfindungsgemäß bevorzugter Weise werden als Dispergiermittel insbesondere solche Verbindungen ausgewählt, wie sie in den Druckschriften EP 1 593 700 B1, EP 0 154 678 B1, EP 0 318 999 B1, EP 0 270 126 B1, EP 0 893 155 B1, EP 0 417 490 B1, EP 1 081 169 B1, EP 1 650 246 A1, EP 1 486 524 A1, EP 1 640 389 A1, EP 0 879 860 B1, WO 2005/097872 A1 und EP 1 416 019 A1 beschrieben sind, deren jeweiliger Offenbarungsgehalt hiermit in vollem Umfang durch Bezugnahme eingeschlossen ist.

Gemäß einer Ausführungsform kann das Dispergiermittel ausgewählt sein aus Additionsverbindungen, welche erhältlich sind durch die Umsetzung von
a) einem oder mehreren urethdiongruppenhaltigen Polyisocyanaten mit
b) einer oder mehreren Verbindungen der Formel (I)

   Y-(XH)ₙ (I)

   wobei
   XH für eine gegenüber Isocyanaten reaktive Gruppe steht und
   Y für eine nicht gegenüber Isocyanaten reaktive, monomere oder polymere Gruppe steht, die eine oder mehrere aliphatische, cycloaliphatische, aliphatische und/oder aromatische Gruppen umfaßt,
   wobei Y eine zahlenmittlere Molmasse kleiner 20.000 g/mol besitzt und
   wobei n für 1,2 oder 3 steht und
   wobei für mindestens 50 Mol.-% der Verbindungen der Formel (I) gilt, daß n = 1 ist,
   unter der Vorgabe, daß im wesentlichen alle freien Isocyanatgruppen der Komponente a) mit den Verbindungen der Formel (I) zu einem Urethdiongruppen enthaltenden Zwischenprodukt umgesetzt werden,
   wobei anschließend die Urethdiongruppen mit
c) einer oder mehreren Verbindungen der allgemeinen Formel (II)

   Z-NHR (II)

   zur Reaktion gebracht werden, worin
   R für Wasserstoff oder eine geradkettige oder verzweigte Alkylgruppe mit 1 bis 4 Kohlenstoffatomen steht und
   Z einen aliphatischen, cycloaliphatischen und/oder aromatischen basischen Rest darstellt
   und gegebenenfalls nach dieser Reaktion im Reaktionsprodukt gegebenenfalls noch vorhandene reaktive Aminogruppen mit gegenüber Aminogruppen reaktiven Verbindungen umgesetzt werden;
   sowie Salzen oder Quarternisierungsprodukten dieser Additionsverbindungen.

Bei dieser Ausführungsform kann 'Y' gegebenenfalls Heteroatome O, S und/oder N und/oder Ether-, Urethan-, Carbonat, Siloxan- und/oder Estergruppen enthalten und kann gegebenenfalls Wasserstoff gegen Halogen substituiert sein.

Bei dieser Ausführungsform kann Z eine oder mehrere der folgenden Bedeutungen haben:
A) eine aliphatische und/oder cycloaliphatische Gruppe mit mindestens einer tertiären Aimogruppe oder
B) eine heterocyclische Gruppe mit mindestens einem basischen Ringstickstoffatom, das kein Wasserstoff enthält, wobei die heterocyclische Gruppe über eine organische Kopplungsgruppe an die Gruppe NHR gebunden sein kann, oder
C) ein Rest eines gegebenenfalls modifizierten Polyamins und/oder Polyimins.

Bei dieser Ausführungsform können als Z-NHR Verbindungen aus der Gruppe von Diethylentriamin, Triethylentetramin, Teraethylenpentamin, Pentaethylenhexamin, Hexaethylenheptamin, höheren linearen Kondensaten der allgemeinen Formel NH₂-(C₂H₄NH)ₙ-C₂H₄-NH₂ mit n > 5, verzweigten Poly-(C₂-C₄)-alkylenaminen, Poly-(C₂-C₄)-alkyleniminen mit tertiären Aminogruppen und einem zahlenmittleren Molekulargewicht bis zu 1.000.000 g/mol oder Mischungen solcher Amine verwendet werden.

Bei dieser Ausführungsform kann es sich im Fall der verzweigten Poly-(C₂-C₄)-alkylenamine mit tertiären Aminogruppen um Aziridinpolymere (Polyethylenimine) handeln und/oder kann ein Teil der vorliegenden freien reaktiven Aminogruppen mit Epoxiden, Carbonaten, Carbonsäuren und/oder α,β-ungesättigten Verbindungen umgesetzt werden und/oder können als Verbindungen der Formel (I) hydroxyfunktionelle Polyether, hydroxyfunktionelle Polyester, hydroxyfunktionelle Polyetherpolyester und/oder aliphatische und/oder cycloaliphatische Alkohole mit 2 bis 30 Kohlenstoffatomen, deren Wasserstoffatome gegebenenfalls teilweise durch Halogen und/oder Arylreste ersetzt sind, eingesetzt werden und/oder kann es sich bei den urethdiongruppenhaltigen Polyisocyanaten um cyclische Dimerisierungsprodukte von Diisocyanaten auf Basis von Hexamethylendiisocyanat, Isophorondiisocyanat und/oder Toluylendiisocyanat handeln.

Bei einer alternativen Ausführungsform können als Dispergiermittel Additionsverbindungen und deren Salze eingesetzt werden, welche erhältlich sind durch Umsetzung von Polyisocyanaten, Hydroxyverbindungen, Zerewitinoff-Wasserstoff sowie mindestens eine stickstoffhaltige basische Gruppe enthaltenden Verbindungen und gegebenenfalls Verbindungen, die Aminwasserstoff enthalten, gegebenenfalls in Anwesenheit von Lösungsmitteln und gegebenenfalls in Gegenwart von Umsetzungskatalysatoren, wobei diese Additionsverbindungen dadurch erhältlich sind, daß Polyisocyanate mit einer mittleren Funktionalität von 2.5 bis 6
a) mit Monohydroxyverbindungen der Formel (I')

   Y'-OH (I')

   wobei Y' die folgenden Bedeutungen hat:
   (i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
   (ii) mindestens eine -O- und/oder -COO-Gruppe enthaltende aliphatische, cycloaliphatische und/oder aromatische Gruppen mit Molekulargewichten von 350 bis 8.000, wobei die Wasserstoffatome teilweise durch Halogene ersetzt sein können,
   in einer solchen Menge umgesetzt werden, daß 15 bis 50 %, vorzugsweise 20 bis 40 %, besonders bevorzugt 20 bis 35 %, der NCO-Gruppen umgesetzt sind,
b) das erhaltene Reaktionsprodukt mit Verbindungen der Formel (II')

   G-(E)ₙ (II')

   wobei E für -OH-, -NH₂ und/oder -NHR (worin R eine Alkylgruppe mit 1 bis 4 Kohlenstoffatomen darstellt) steht und n für 2 oder 3 steht und G eine mindestens 2 Kohlenstoffatome enthaltende aliphatische Gruppe mit Molekulargewichten von höchstens 3.000 darstellt, die -O-, -COO-, -CONH-, -S- und/oder -SO₂-Gruppen enthalten kann, in einer solchen Menge umgesetzt wird, daß weitere 15 bis 45 %, vorzugsweise 20 bis 40 %, besonders bevorzugt 20 bis 35 %, der NCO-Gruppen der ursprünglich eingesetzten Polyisocyanate umgesetzt sind, jedoch die Summe der NCO-Umsetzungsgrade der Umsetzungen a) und b) mindestens 40 % und maximal 75 %, vorzugsweise 45 bis 65 %, besonders bevorzugt 45 bis 55 %, beträgt,
c) das erhaltene Reaktionsprodukt mit Verbindungen der allgemeinen Formel (III')

   Z-Q (III')

   worin Q für -OH, -NH₂, -NHR (worin R eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit 1 bis zu 10 C-Atomen an die Gruppe Q gebunden sein kann, in einer solchen Menge umgesetzt wird, daß auf jede verbleibende in den Stufen a) und b) noch nicht umgesetzte Isocyanatgruppe mindestens ein Molekül der Verbindung Z-Q entfällt.

Gemäß einer wiederum alternativen Ausführungsform können als Dispergiermittel Additionsverbindungen und deren Salze eingesetzt werden, welche dadurch erhältlich sind, daß, gegebenenfalls in Anwesenheit von Lösungsmitteln und gegebenenfalls in Gegenwart von Umsetzungskatalysatoren, Polyisocyanate mit einer mittleren Funktionalität von 2,5 bis 20
a) mit Monohydroxyverbindungen der Formel (I")

   Y-OH (I")

   wobei Y die folgenden Bedeutungen hat:
   (i) aliphatische und/oder cycloaliphatische Kohlenwasserstoffgruppen mit 8 bis 30 Kohlenstoffatomen, deren Wasserstoffatome teilweise durch Halogene und/oder Arylreste ersetzt sein können,
   (ii) mindestens eine -O- und/oder -COO-Gruppe enthaltende aliphatische, cycloaliphatische und/oder aromatische Gruppen mit mittleren Molekulargewichten Mₙ von 200 bis 10.000, wobei die Wasserstoffatome teilweise durch Halogene ersetzt sein können,
   in einer solchen Menge umgesetzt werden, daß 10 bis 70 %, vorzugsweise 15 bis 45 %, besonders bevorzugt 20 bis 40 %, der NCO-Gruppen umgesetzt sind,
b) mit Verbindungen der Formel (II")

   G-(E)ₙ (II")

   wobei E für -OH-, -NH₂ und/oder -NHR (worin R eine Alkylgruppe mit 1 bis 4 Kohlenstoffatomen darstellt) steht und n für 2 oder 3 steht und G eine mindestens 2 Kohlenstoffatome enthaltende aliphatische cycloaliphatische und/oder aromatische Gruppe mit mittlerem Molekulargewicht M̅ₙ von höchstens 3.000 darstellt, die -O-, -COO-, -CONH-, -S-, und/oder -SO₂-Gruppen enthalten kann, in einer solchen Menge umgesetzt werden, daß 1 bis 50 %, vorzugsweise 5 bis 45 %, besonders bevorzugt 15 bis 40 %, der NCO-Gruppen der ursprünglich eingesetzten Polyisocyanate umgesetzt sind, wobei jedoch durch die Umsetzungen a) und b) insgesamt mindestens 20 % und maximal 85 %, vorzugsweise 30 bis 65 %, besonders bevorzugt 40 bis 60 %, der NCO-Gruppen der ursprünglich eingesetzten Polyisocyanate umgesetzt sind,
c) mit Verbindungen der allgemeinen Formel (III")

   Z-Q (III")

   worin Q für -OH, -NH₂, -NHR (worin R für eine Alkylgruppe mit 1 bis 4 Kohlenstoffatomen steht) oder -SH steht und Z eine aliphatische Gruppe mit 2 bis 10 C-Atomen mit mindestens einer tertiären Aminogruppe oder eine heterocyclische Gruppe mit mindestens einem basischen Ringstickstoffatom ist, das kein Wasserstoffatom enthält, wobei die heterocyclische Gruppe über eine Alkylengruppe mit bis zu 10 C-Atomen an die Gruppe Q gebunden sein kann, in einer solchen Menge umgesetzt werden, daß auf jede verbleibende in den Stufen a) und b) nicht umgesetzte Isocyanatgruppe mindestens ein Molekül der Verbindung Z-Q entfällt,
   wobei mindestens 1 Mol-% der oben definierten Verbindungen der Formel (I") ersetzt sind durch solche Verbindungen der Formel (Ia)

   Y'-OH (Ia)

   worin Y' eine aliphatische, cycloaliphatische und/oder aromatische Gruppe mit mittleren Molekulargewichten Mₙ von 200 bis 10.000, wobei die Wasserstoffatome teilweise durch Halogene ersetzt sein können, und die mindestens eine -NHCOO-Gruppe enthalten, darstellt und/oder mindestens 1 Mol-% der oben definierten Verbindungen der Formel (I") ersetzt sind durch monohydroxyfunktionelle Polyacrylsäureeseter und/oder Polymethacrylsäureester und/oder Copolymerisaten davon mit bis zu 50 Mol-%, bezogen auf Monomereinheiten, Comonomeren, insbesondere Vinylester, Vinylether, Styrol, Vinyltoluol und/oder Vinylcyclohexan, mit einem mittleren Molekulargewicht Mₙ von höchstens 10.000, und/oder mindestens 1 Mol-% der oben definierten Verbindungen der Formel (II") ersetzt sind durch solche Verbindungen der Formel (IIa)

   G'-(OH)ₙ (IIa)

   worin G' eine mindestens 2 Kohlenstoffatome enthaltende aliphatische, cycloaliphatische und/oder aromatische Gruppe mit mittlerem Molekulargewicht M̅ₙ von höchstens 3.000 darstellt, die mindestens eine -NHCOO- und/oder -Si(CH₃)₂O-Gruppe enthält, darstellt und n für eine Zahl von 2 bis 3 steht.

Gemäß einer wiederum alternativen Ausführungsform können als Dispergiermittel Additionsverbindungen und deren Salze eingesetzt werden, welche erhältlich sind durch Umsetzung von Polyisocyanaten, Hydroxyverbindungen und weiteren Zerewitinoff-Wasserstoff sowie mindestens eine saure funktionelle Gruppierung oder Alkoxysilyl-Gruppe enthaltenden Verbindungen, gegebenenfalls in Anwesenheit von Lösungsmitteln und gegebenenfalls in Gegenwart von Umsetzungskatalysatoren, wobei die Additionsverbindungen dadurch erhältlich sind, daß Polyisocyanate mit einer mittleren Funktionalität von 2,5 bis 10
a) mit Monohydroxyverbindungen der Formel (I"')

   Y-OH (I"')

   wobei Y die folgenden Bedeutungen hat:
   (i) aliphatische und/oder cycloaliphatische Kohlenwasserstoffgruppen mit 8 bis 30 Kohlenstoffatomen, deren Wasserstoffatome teilweise durch halogene und/oder Arylreste ersetzt sein können,
   (ii) mindestens eine -O-, -NHCOO- und/oder -COO-Gruppe enthaltende aliphatische, cycloaliphatische und/oder aromatische Gruppe mit mittleren Molekulargewichten M von 200 bis 10.000, wobei die Wasserstoffatome teilweise durch Halogene ersetzt sein können,
   in einer solchen Menge umgesetzt werden, daß 10 bis 70 % der NCO-Gruppen umgesetzt sind,
b) mit Verbindungen der Formel (II"')

   G-(E)ₙ (II"')

   wobei G-(E)ₙ Diole, Triole, Diamine, Dihydroxydialkylsulfide oder Dihydroxysulfone darstellt, n für 2 oder 3 steht und G eine mindestens 2 Kohlenstoffatome enthaltende aliphatische, cycloaliphatische und/oder aromatische Gruppe mit mittlerem Molekulargewicht M̅ₙ von höchstens 3.000 darstellt, die -O-, -COO-, CONH-, -NHCOO-, -S-, -Si(CH₃)₂O- und/oder -SO₂-Gruppen enthalten kann, in einer solchen Menge umgesetzt wird, daß 1 bis 50 % der NCO-Gruppen der ursprünglich eingesetzten Polyisocyanate umgesetzt sind, wobei jedoch durch die Umsetzungen a) und b) insgesamt mindestens 20 % und maximal 85 % der NCO-Gruppen der ursprünglich eingesetzten Polyisocyanate umgesetzt sind,
c) mit mindestens einer der Verbindungen der allgemeinen Formel (III"')

   Z-Q (III"')

   oder einer Verbindung der Formal (IV"')

   Z-NH-Z (IV"')

   worin Q für -OH, -NH₂, -NHR (worin R für eine Alkylgruppe mit 1 bis 4 Kohlenstoffatomen steht) oder -SH steht und jedes Z, die gleich oder verschieden sind, einen aliphatischen und/oder cycloaliphatischen und/oder aromatischen Rest mit mindestens einer sauren funktionellen Gruppierung und/oder mit mindestens einer Si(OR)ₘ(R')₃₋ₘ-Gruppe (worin R und R' Alkylgruppen mit 1 bis 10 Kohlenstoffatomen darstellen und m = 1 bis 3) darstellt oder Z-Q Mono- oder Polyhydroxyverbindungen darstellt, die eine primäre Aminogruppe enthalten,
   in einer solchen Menge umgesetzt wird, daß auf jede verbleibende in den Reaktionen a) und b) noch nicht umgesetzte Isocyanatgruppe mindestens 0,8 Moleküle der Verbindung Z-Q und/oder Z-NH-Z entfallen, und
d) wenn das erhaltene Reaktionsprodukt nicht umgesetzte Hydroxyd-Gruppen enthält, diese Hydroxyl-Gruppen mit Polycarbonsäuren mit mindestens 2 Carboxygruppen oder deren Anhydriden in einer solchen Menge umgesetzt werden, daß auf jede umzusetzende OH-Gruppe mindestens 0,8 Moleküle Polycarbonsäure oder Polycarbonsäureanhydrid eingesetzt wird.

Gemäß einer wiederum alternativen Ausfuhrungsform kann als Dispergiermittel ein Dispergiermittel eingesetzt wird, welches erhältlich ist durch Versalzung einer aminfunktionellen Verbindung mittels einer Säure, wobei als aminofunktionelle Verbindung ein Polyamin mit zumindest drei Aminogruppen aus der Gruppe von nicht modifizierten aliphatischen linearen Polyaminen und/oder nicht modifizierten aliphatischen verzweigten Polyaminen und/oder modifizierten Polyaminen, wobei es sich bei diesen um mit Mono- oder Polyisocyanaten umgesetzte Polyamine, mit epoxyfunktionellen Stoffen umgesetzte Polyamine, mit cyclischen Carbonaten umgesetzte Polyamine, mittels einer Michael-Reaktion mit a,β-ungesättigten Verbindungen umgesetzte Polyamine, alkylierte und/oder quarternisierte Polyamine und/oder mit Carbonsäuren amidierte verzweigte aliphatische Polyamine handelt, mit der Maßgabe, daß nach der Modifikation noch drei versalzbare Aminogruppen pro Molekül vorhanden sind, oder eine Mischung solcher Polyamine verwendet wird, und wobei als Säure mindestens ein Phosphorsäureester der allgemeinen Formel

(QH)₃₋ₙPO(OR¹)ₙ mit n = 1 oder 2,

wobei R¹ einen Alkyl-, Aryl- oder Aralkylrest mit mindestens 5 C-Atomen und/oder einen Rest eines oxyalkylierten Alkohols mit einem zahlenmittleren Molekulargewicht zwischen 100 und 5.000 g/mol und/oder einen Rest mit mindestens einer Carbonsäureestergruppe und/oder einer Urethangruppe mit einem zahlenmittleren Molekulargewicht zwischen 100 und 5.000 g/mol darstellt, verwendet wird.

Gemäß einer wiederum alternativen Ausführungsform können als Dispergiermittel ein Phosphorsäureester und deren Salze der Formel (I) 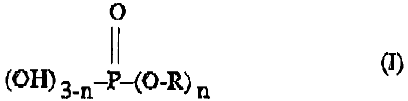 eingesetzt werden, wobei R einen mindestens ein Ethersaurestoffatom (-O-) und mindestens eine Carbonsäureestergruppe (-COOO-) und/oder Urethangruppe (-NHCOO-) enthaltenden aliphatischen, cycloaliphatischen und/oder aromatischen Rest ohne Zerewitinoff-Wasserstoff mit einem mittleren Molekulargewicht Mₙ von 200 bis 10.000 darstellt, wobei die Wasserstoffatome der aliphatischen Gruppen teilweise durch Halogenatome ersetzt sein können und wobei das Verhältnis der Zahl der Ethersauerstoff atome zu der Zahl der Carbonsäureestergruppen und/oder Urethangruppen in jeder Gruppe R im Bereich von 1 : 20 bis 20 : 1 vorliegt und wobei n für 1 oder 2 steht, insbesondere wobei solche Phosphorsäureester ausgenommen sind, bei denen R ein von Urethangruppen freier Monoester einer monofunktionellen Fettsäure und eines Polyols ist.

Gemäß einer wiederum alternativen Ausführungsform kann als Dispergiermittel ein verzweigtes Polymer eingesetzt werden, welches sich aus folgender Monomerenmischung ableitet:
(A) 50 bis 93 Gew.-% wenigstens eines ethylenisch ungesättigten Monomers,
(B) 2 bis 25 Gew.-% wenigstens eines ethylenisch ungesättigten Macromonomers mit einem Molekulargewicht von 1.000 bis 20.000 und
(C) 5 bis 25 Gew.-% wenigstens eines polymerisierbaren Imidazolderivats,
wobei die Komponenten (A), (B) und (C) zusammen 100 Gew.-% ergeben, das Polymer ein Molekulargewicht von 15.000 bis 100.000 besitzt und gegebenenfalls in Salzform vorliegt.

Gemäß einer wiederum alternativen Ausführungsform können als Dispergiermittel alkoxylierte Epoxid/Amin-Addukte mit einem zahlenmitteleren Molekulargewicht von mehr als 500 g/mol eingesetzt werden, welche erhältlich sind durch die Umsetzung von
(A) Mono- und/oder Polyepoxiden mit mindestens 8 Kohlenstoffatomen und
(B) primären und/oder sekundären Aminen und/oder primären und/oder sekundären Alkanolamiden und/oder sekundären Alkylalkanolaminen unter Bildung eines Addukts mit einer oder mehreren sekundären OH-Gruppen
   und nachfolgende Alkoxylierung des Addukts mit
(C) Alkylenoxiden.

Gemäß einer wiederum alternativen Ausführungsform können als Dispergiermittel Additionsverbindungen eingesetzt werden, welche erhältlich sind durch Umsetzung von
(I) mono- oder polyfunktionellen aromatischen Epoxiden mit
(II) Polyoxyalkylenmonoaminen, die ein zahlenmittleren Molekulargewicht von mehr als 400 g/mol und eine primäre oder sekundäre Aminogruppe mit mindestens vier Ethersauerstoffen pro Molekül aufweisen,
wobei 90 bis 100 % der Epoxidgruppen des Ausgangsmaterials umgesetzt sind, der Gewichtsanteil der Additionsverbindungen an aromatischen Gruppen nicht mehr als 50 % beträgt und die Additionsverbindungen mindestens eine versalzbare Aminogruppe pro Molekül aufweisen oder als Salz vorliegen.

Gemäß einer wiederum alternativen Ausführungsform können als Dispergiermittel Copolymerisate eingesetzt werden, welche erhältlich sind durch Copolymerisation von (a) 1 bis 80 Mol-% mindestens eines ethylenisch ungesättigten 1,2-Dicarbonsäurederivats, (b) 2 bis 80 Mol% mindestens eines ungesättigten Monocarbonsäurederivats mit 12 bis 30 Kohlenstoffatomen, (c) 1 bis 90 Mol-% mindestens eines Polyakylenoxyallylethers mit einem zahlenmittleren Molekulargewicht von bis zu 5.000 g/mol und (d) 0 bis 30 Mol-% weiterer nicht unter (a), (b) oder (c) fallender ungesättigter Monomere, gegebenenfalls gefolgt von einer Umsetzung dieser Copolymerisate mit Ammoniak, Wasser, Alkoholen, Aminoalkoholen und/oder Alkali- oder Erdalkalihydroxiden.

Gemäß einer wiederum alternativen Ausführungsform können als Dispergiermittel Acrylsäurealkylesterpolymere eingesetzt werden, welche frei sind von Epoxyfunktionalität, wobei 1 bis 50 % der Estergruppen der Polymeren zu Säureamiden umgesetzt ist, wobei als Acrylsäurealkylesterpolymere erhältlich sind durch Aminolyse von Estergruppen des Polymers mittels Aminen, wobei zur Aminolyse mindestens ein Amin aus der Gruppe von (a) Aminen der allgemeinen Formel NH₂-R¹-NR²R³, wobei R¹ ein zweiwertiger Alkylenrest mit 2 bis 4 Kohlenstoffatomen ist und R² und R³ aliphatische und/oder alicyclische Alkylreste mit 1 bis 12 Kohlenstoffatomen sind, die gleich oder verschieden sein können, und (b) Aminen der allegemeinen Formel NH₂-R¹-Z, wobei R¹ ein zweiwertiger Alkylenrest mit 2 bis 4 Kohlenstoffatomen ist und Z ein 5 oder 6gliedriger N-haltiger Heterocyclus ist, der bis zu 2 Stickstoffatome oder zusätzlich Sauerstoff aufweisen kann, verwendet wird.

Gemäß einer wiederum alternativen Ausführungsform kann als Dispergiermittel ein Dispergiermittel der allgemeinen Formel 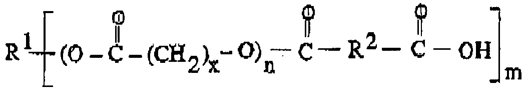 eingesetzt werden, worin
R¹ den organischen Rest einer Verbindung mit 1 bis 3 Hydroxylgruppen pro Molekül oder den Rest eines Polysiloxans darstellt, das 1 bis 3 nicht an ein Siliciumatom gebundene Hydroxylgruppen aufweist,
R² einen zweiwertigen, geradkettigen oder verzweigten aliphatischen oder cycloaliphatischen Rest darstellt,
x = 2 bis 18, n = 10 bis 500 und m = 1 bis 3 ist,
wobei das Dispergiermittel ein Molekulargewicht von 1.000 bis 20.000 g/mol und eine Säurezahl von 3 bis 180 mgKOH/g aufweist und bei Raumtemperatur fest ist.

Gemäß einer wiederum alternativen Ausführungsform können als Dispergiermittel Gradientencopolymere eingesetzt werden, wobei die Gradientencopolymere durch lebende kontrollierte Polymerisation von ethylenisch ungesättigten Monomeren unter Verwendung eines monofunktionellen Initiators, der kein Polymer ist, erhältlich sind und wobei die Gradientencopolymere entlang der Polymerkette einen Übergang von hydrophilen zu hydrophoben Eigenschaften besitzen, wobei
a) ein Monomer (I) kontinuierlich zu einem Monomer (II) unter Reaktion zugeleitet wird oder
b) ein Monomer (I) und ein Monomer (II) mit unterschiedlichen Dosierraten kontinuierlich einem Reaktionsbehälter zur Reaktion zugeleitet werden,
wobei entweder durch das Monomer (I) oder durch das Monomer (II) Gruppen in die Gradientencopolymere eingeführt werden, die als solche oder nach weiterer chemischer Umsetzung der Gradientencopolymere in Wechselwirkung mit den zu dispergierenden Kohlenstoffnanoröhren (CNTs) zu treten imstande sind, und durch das andere Monomer Gruppen in die Gradientencopolymere eingeführt werden, die mit der kontinuierlichen, insbesondere Dispersionsmittel verträglich sind, wobei entweder das Monomer (I) oder die Produkte aus der weiteren chemischen Umsetzung des Monomers (I) einerseits oder das Monomer (II) oder die Produkte der weiteren chemischen Umsetzung des Monomers (II) andererseits hydrophobe Eigenschaften besitzen und das jeweils andere Monomer oder die Produkte der weiteren chemischen Umsetzung des jeweils anderen Monomers hydrophile Eigenschaften besitzen,
wobei die Eigenschaften hydrophob und hydrophil folgendermaßen definiert sind, daß hydrophile Eigenschaften bei einem Löslichkeitsparameter größer oder gleich 22 J^{1/2}/cm^{3/2} und hydrophobe Eigenschaften bei einem Löslichkeitsparameter kleiner 22 J^{1/2}/cm^{3/2} vorliegen,
und wobei die Begriffe "Monomer (I)" und "Monomer (II)" auch Mischungen aus Monomeren (I) einerseits und Monomeren (II) andererseits umfassen.

Was das erfindungsgemäße Verfahren anbelangt, so ist dieses grundsätzlich in kontinuierlichem wie im diskontinuierlichen Betrieb durchführbar, und dies mit relativ geringem Zeitaufwand. Aufgrund seiner geringen Komplexität ist das erfindungsgemäße Verfahren ohne weiteres industriell einsetzbar, flexibel und wirtschaftlich durchführbar und bis zur Produktion im Tonnenmaßstab anpaßbar ausgestaltet.

Grundsätzlich ist das erfindungsgemäße Verfahren für verschiedenste Dispersionsmittel bzw. Dispersionsmedien, verschiedenste Dispergiermittel bzw. Dispergatoren und verschiedenste Kohlenstoffnanoröhren (CNTs) anwendbar und ohne weiteres mit weiteren Prozessen bzw. Prozeßschritten kombinierbar.

Wie eingangs geschildert, stellt das Dispergieren von CNTs eine große Hierausforderung dar, da die CNTs über ein sehr großes Aspektverhältnis verfügen und stark verknäult vorliegen: So bewegen sich die Durchmesser beispielsweise im Bereich von 3 bis 25 nm, die Längen jedoch beispielsweise bis zu ca. 10 mm. Aufgrund des hohen Verknäulungsgrades sind sehr hohe Energieeinträge bzw. Scherkräfte notwendig, um die CNTs zu separierten. Erfolgt das Entknäulen nur durch hohen Energieeintrag ohne gleichzeitigen Einsatz geeigneter Dispergiermittel, so werden die CNTs nur zerkleinert und nicht ausreichend stabilisiert, so daß nichtlangzeitstabile inhomogene Dispersionen resultieren. Der Einsatz von Dispergiermitteln dient zum einen dem Benetzen der CNTs, um ein leichteres und schonenderes Entknäulen zu gewährleisten, und zum anderen dem Stabilisieren der so erhaltenen separierten CNTs durch Belegung mit dem Dispergiermittel, so daß man mit dem erfindungsgemäßen Verfahren stabile homogene Dispersionen erhält. Idealerweise zeigen die Dispersionen nur einen geringen Anstieg in der Viskosität und eine hohe Wirksamkeit der CNTs.

Dagegen resultieren die im Stand der Technik beschriebenen Verfahren zumeist in inhomogenen, nichtlangzeitstabilen Dispersionen. Weiterhin zeigen die Dispersionen des Standes der Technik einen hohen Anstieg in der Viskosität bei zugleich nur geringen Partikelgehalten von nur maximal ca. 1%.

Überraschenderweise wurde nun gefunden, daß im Rahmen des erfindungsgemäßen Verfahrens durch Kombination geeigneter Dispergiermittel mit hohen Energieeinträgen bzw. Scherkräften ein schonendes und kostengünstiges Verfahren vorliegt, um CNTs in deutlich höheren Konzentrationen in verschiedensten Medien stabil zu dispergieren.

Das erfindungsgemäße Verfahren führt zu Dispersionen mit hohen Gehalten an Kohlenstoffnanoröhren (CNTs) bzw. mit hohen Füllgraden (beispielsweise oberhalb von 5 Gew.-%, bezogen auf die resultierenden Dispersionen), und dies bei gleichzeitig niedrigen Viskositäten und somit guter Handhabbarkeit.

Des weiteren weisen die nach dem erfindungsgemäßen Verfahren erhältlichen Dispersionen hohe Lagerstabilitäten auf.

Gegenstand der vorliegenden Erfindung - gemäß einem **zweiten** Aspekt der vorliegenden Erfindung - sind somit Dispersionen von Kohlenstoffnanoröhren (CNTs) in einer kontinuierlichen Phase, insbesondere in mindestens einem Dispersionsmittel, welche durch das zuvor geschilderte erfindungsgemäße Verfahren erhältlich sind.

Für weitergehende diesbezügliche Einzelheiten zu den erfindungsgemäßen Dispersionen kann auf die entsprechenden auf die Dispersionen selbst gerichteten Ansprüche verwiesen werden.

Die nach dem erfindungsgemäßen Verfahren erhältlichen Dispersionen nach der vorliegenden Erfindung weisen eine außergewöhnliche Stabilität, insbesondere Lagerstabilität, auf; insbesondere sind die erfindungsgemäßen Dispersionen über mindestens eine Woche, vorzugsweise mindestens einen Monat, besonders bevorzugt mindestens drei Monate, ganz besonders bevorzugt mindestens sechs Monate, lagerstabil. Wie zuvor geschildert, sind die erfindungsgemäßen Dispersionen darüber hinaus bei Raumtemperatur fließfähig und auf diese Weise gut handhabbar. Die erfindungsgemäß hergestellten Dispersionen weisen ein newtonisches oder allenfalls thixotropes oder strukturviskoses Verhalten, vorzugsweise ein newtonisches Verhalten, auf.

Die erfindungsgemäß erhältlichen Dispersionen eignen sich für eine Vielzahl von Anwendungen. Weiterer Gegenstand der vorliegenden Erfindung - gemäß einem **dritten** Aspekt der vorliegenden Erfindung - ist somit die erfindungsgemäße Verwendung der nach dem erfindungsgemäßen Verfahren erhältlichen Dispersionen, wie sie in den entsprechenden Verwendungsansprüchen definiert ist.

So eignen sich die erfindungsgemäßen Dispersionen beispielsweise für die Anwendung im Bereich der Elektronik, beispielsweise im Bereich der Computer-, Halbleiter- und Meßtechnik und -industrie, beispielsweise zur Herstellung von leitenden oder halbleitenden Strukturen, nanoelektrischen Strukturen und Vorrichtungen, Transistoren, nichtflüchtigen Speichern, Displays und Bildschirmen und deren Komponenten sowie meßtechnischen und computertechnischen Bauteilen und Komponenten, wie Schaltkreisen, Dioden und dergleichen etc.

Weiterhin eigenen sich die erfindungsgemäßen Dispersionen zur Anwendung bzw. Inkorporierung in Kunststoffen und Kunststoffmassen, Beschichtungen, Lacken, Farben, Komposit- bzw. Verbundmaterialien und dergleichen.

Beispielsweise können die erfindungsgemäßen Dispersionen verwendet werden, um die elektrische Leitfähigkeit zu erhöhen und/oder die mechanischen Eigenschaften zu verbessern, insbesondere die Festigkeit, vorzugsweise in bezug auf die vorgenannten Materialien (d. h. Kunststoffe und Kunststoffmassen, Beschichtungen, Lacken, Farben, Komposit- bzw. Verbundmaterialien etc.). So eignen sich die erfindungsgemäßen Dispersionen beispielsweise als Verstärkungsmaterialien in den vorgenannten Materialien.

Des weiteren eignen sich die erfindungsgemäß hergestellten Dispersionen zur Herstellung von Bündeln, Fasern, Matten und anderen zusammenhängenden Strukturen von Kohlenstoffnanoröhren (CNTs) (z. B. nach Entfernen des Dispersionsmittels).

Weiterhin sind die erfindungsgemäßen zur Anwendung im Bereich der Luft- und Raumfahrttechnik geeignet.

Ein weiterer Anwendungsbereich der erfindungsgemäßen Dispersionen ist der Bereich der Kühltechnik, insbesondere zur Herstellung von Kühlkörpern für verschiedenste Anwendungen (z. B. für GSM-Basisstationen, als CPU-Kühler etc.).

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

Die vorliegende Erfindung wird anhand der nachfolgenden Ausführungsbeispiele veranschaulicht, welche die vorliegende Erfindung aber nicht beschränken sollen.

### Ausführungsbeispiele:

### Ausführungsbeispiele A:

Die besonderen Vorteile der Erfindung sind im folgenden am Beispiel des Dispergierens von CNTs in PMA (Propylenglykolmonomethylether bzw. Methoxypropylacetat) als Dispersionsmedium unter Verwendung verschiedener Dispergiermittel und einer Ultraschalldispergiereinheit beschrieben.

Zunächst wurden verschiedenen Vergleichsversuche mit und ohne Dispergiermittel nur mit einem Dispermaten durchgeführt, das Ergebnis war jedoch in allen Fällen enttäuschend: Die Dispersionen waren sehr inhomogen und setzen bereits nach wenigen Stunden bis einem Tag vollständig ab.

Analoge Vergleichsversuche mit dem Ultraschallgeber zeigten hingegen bessere Resultate: So setzt eine 0,1%ige Dispersion von CNTs ohne Dispergiermittel nur wenig ab, wirkt jedoch noch sehr inhomogen. In diesem Fall werden die Agglomerate zwar aufgebrochen, die CNTs aber im hohen Maße beschädigt und nicht ausreichend stabilisiert. Eine so hergestellte Dispersion ist zur industriellen Verwendung nicht geeignet. Der Zusatz eines Dispergiermittels steigert das Ergebnis allerdings erheblich.

Verwendet man also nur Ultraschall oder nur Dispergiermittel, so resultieren die Versuche in nichtstabilen und inhomogenen Dispersionen oder Aufschlämmungen mit deutlichem Absetzverhalten.

In erfindungsgemäßen Versuchen wurden unterschiedliche Dispergiermittel in unterschiedlichen Mengen in Kombination mit Ultraschalleintrag angewendet, was zu den gewünschten Resultaten führte.

**Tabelle 1: Verwendete Netz- und Dispergiermittel**

| Dispergiermittel | Aufbau | Festkörper |
|---|---|---|
| DISP-I | Hochmolekulares Copolymer mit pigmentaffinen Gruppen (Ausführungsbeispiel 23 der EP 1 593 700 B1) | 98 % |
| DISP-II | Alkylammoniumsalz eines hochmolekularen Copolymers (Ausführungsbeispiel 28 der EP 0 893 155 B1) | 96 % |

Als erste Versuchsreihe wurden 1%ige Dispersionen an MWCNTs in Methoxypropylacetat (PMA) unter Einsatz von Ultraschall hergestellt (Tabelle 2). Anhand des optischen Eindruckes direkt nach dem Dispergiervorgang, des Absetzverhaltens und der Viskosität wurden die Ergebnisse bewertet. Die Herstellung der Dispersionen erfolgt analog zu der Herstellung, wie sie im nachfolgenden Ausführungsbeispiel B beschrieben ist,

**Tabelle 2: Versuchsübersicht über die 1%igen Dispersionen von MWCNTs in PMA**

| Dispergiermittel | Dispergiermittelkonzentr. (bezogen auf CNTs) | Dispergieren | Viskosität | Flockulate | Stabilität |
|---|---|---|---|---|---|
| DISP-II | 20,0 % | Ultraschall | hoch | große Partikel an der Glaswand | nicht bestimmbar |
| DISP-I | 20,0 % | Ultraschall | hoch | große Partikel an der Glaswand | nicht bestimmbar |
| ohne | 0 % | Ultraschall | hoch | große Partikel an der Glaswand | nicht bestimmbar |
| ohne | 0 % | Dispermat | niedrig | vollständige Phasentrennung | komplett abgesetzt |

Um insbesondere das Absetzverhalten besser beurteilen zu können, wurden in einem zweiten Schritt stärker verdünnte Dispersionen mit diesen Dispergiermitteln angesetzt (Tabelle 3). Bei einer Konzentration von 0,1 % zeigte die mit DISP-I stabilisierte Dispersion das beste Ergebnis.

**Tabelle 3: Versuchsübersicht über die 0,1%igen Dispersionen von MWCNTs in PMA**

| Dispergiermittel | Dispergiermittelkonzentr. (bezogen auf CNTs) | Dispergieren | Viskosität | Flockulate | Stabilität |
|---|---|---|---|---|---|
| DISP-II | 100,0 % | Ultraschall | niedrig | wenig | nur leichte Phasentrennung |
| DISP-I | 50,0 % | Ultraschall | niedrig | keine | kein Absetzen |
| DISP-I | 100,0 % | Ultraschall | niedrig | wenig bis keine | kein Absetzen |
| DISP-I | 100,0 % | Dispermat | niedrig | vollständige Phasentrennung | komplett abgesetz |
| DISP-I | 150,0 % | Ultraschall | niedrig | keine | kein Absetzen |
| Ohne | 0 % | Dispermat | niedrig | vollständige Phasentrennung | komplett abgesetzt |
| Ohne | 0 % | Ultraschall | niedrig | Viele | leichtes Absetzen |

Bei den Versuchen zeigte sich überraschenderweise, daß die Kombination aus DISP-I und Ultraschall sehr gute Ergebnisse lieferte. Die Ergebnisse waren so gut, daß das System auch 5 % CNT-Gehalt gesteigert werden konnte und die Dispersionen hervorragende Eigenschaften und exzellente Lagerstabilitäten aufwiesen. Auch eine weitere Steigerung auf 10 % oder mehr CNT-Gehalt wurde realisiert.

Weiterhin wurde beobachtet, daß das erfindungsgemäße Verfahren - unabhängig von der Herstellungsweise der CNTs - erfolgreich realisierbar ist, d. h. das erfindungsgemäße Verfahren universell für CNTs einsetzbar ist und keine vorherige Oberflächenmodifizierung der CNTs (in situ oder post-synthetisch) bedingt, wodurch enorme Kosten eingespart werden können.

Hierdurch ergeben sich immense Möglichkeiten für die großtechnische Verwendung von CNTs in zahlreichen Applikationen, da die Dispersionen folgende Vorteile aufweisen:
- hohe Füllgrade von mehr als 5 Gew.-% CNTs
- homogene langzeitstabile Dispersionen
- schonendes Dispergierverfahren (schonende Entknäulung der CNTs)
- universell einsetzbar für alle am Markt erhältlichen CNTs
- kostengünstiges Dispergierverfahren, gleichermaßen upscalebar und batchweise wie kontinuierlich betreibbar
- kombinierbar mit weiteren Prozeßschritten
- geringe Viskositäten realisierbar, falls erforderlich
- Zugabe weiterer funktionalisierter Additive möglich
- Funktionalisierung des Dispergiermittels möglich

In weiteren Versuchen konnte gezeigt werden, daß das erfindungsgemäße Verfahren auch auf andere Lösemittel übertragbar ist. Bei Einsatz von Wasser oder extrem unpolaren Medien entstehen natürlich andere Anforderungen an die funktionalen Gruppen des Dispergiermittels.

Weiterhin lassen sich die erfindungsgemäß hergestellten Dispersionen weiter verarbeiten, z.B. im Hinblick auf eine Orientierung der CNTs in der Dispersionsmittelmatrix. So lassen sich CNTs in einem elektrischen Feld parallel ausrichten. Hierzu müssen die CNTs aber vereinzelt und homogen dispergiert vorliegen, idealerweise in hoher Konzentration. Dies wird nun erstmals durch das erfindungsgemäße Verfahren gewährleistet. Eine anschließende parallele Ausrichtung ist somit möglich und für viele Anwendungen essentiell.

Ein entsprechender Versuchsaufbau ist wie folgt konzipiert: In einem Tank legt man eine Aufschlämmung der agglomerierten CNTs im gewünschten Dispersionsmittel zusammen mit dem Dispergiermittel vor und pumpt dann in einem Kreislauf durch eine Durchflußzelle, in welcher der Dispergiervorgang mittels Ultraschall erfolgt. Die so erhaltene Dispersion kann dann entweder in den Tank zurückgeführt werden und im Kreislauf dispergiert werden, bis der gewünschte Dispersionsgrad erreicht ist (Batchbetrieb) oder in eine weitere Durchflußzelle mit Ultraschalldispergator gepumpt werden (kontinuierlicher Betrieb), Anschließend kann dann die Vermischung z. B. mit einem Resin bzw. Harz (oder einem Lack, einer Beschichtungsflüssigkeit etc.) erfolgen, und ein anschließendes Durchfließen eines elektrischen Feldes richtet die CNTs parallel aus. Die parallele Ausrichtung kann aber auch zu einem späteren Zeitpunkt erfolgen. Vorraussetzung ist nur eine stabile Dispersion vereinzelter CNTs, was durch das erfindungsgemäße Verfahren gewährleistet wird.

### Ausführungsbeispiele B:

### Herstellung einer 1.0%igen Dispersion an CNT (Baytubes^{®}, z.B. Baytubes^{®} C 150 P) in Methoxypropylacetat (PMA) mit 100 % DISP-I

In einem 350-ml-PE-Becher werden 196 g PMA und 2 g DISP-I vorgelegt und mittels eines Dispermaten bei 1000 Upm mit einer Zahnscheibe (d = 40 mm) homogenisiert. Zu der Mischung werden 2 g CNTs zugegeben und das PE-Gefäß in ein auf 5 °C temperiertes Doppelmantelgefäß aus Edelstahl mit Wasser als Kühlmedium gegeben. Zum Dispergieren dient eine Ultraschallsonotrode (d = 38 mm), die ca. 2 bis 3 cm in das Medium eintaucht. Mit einer Leistung von ca. (500 ± 20) W wird die Suspension 1,5 bis 2 min dispergiert, so daß die Temperatur unter 70°C bleibt. Es resultiert eine homogene, lagerstabile schwarze Dispersion mit geringer Viskosität.

### Viskositäten

### Abhangigkeit der Viskosität vom Füllgrad an CNTs

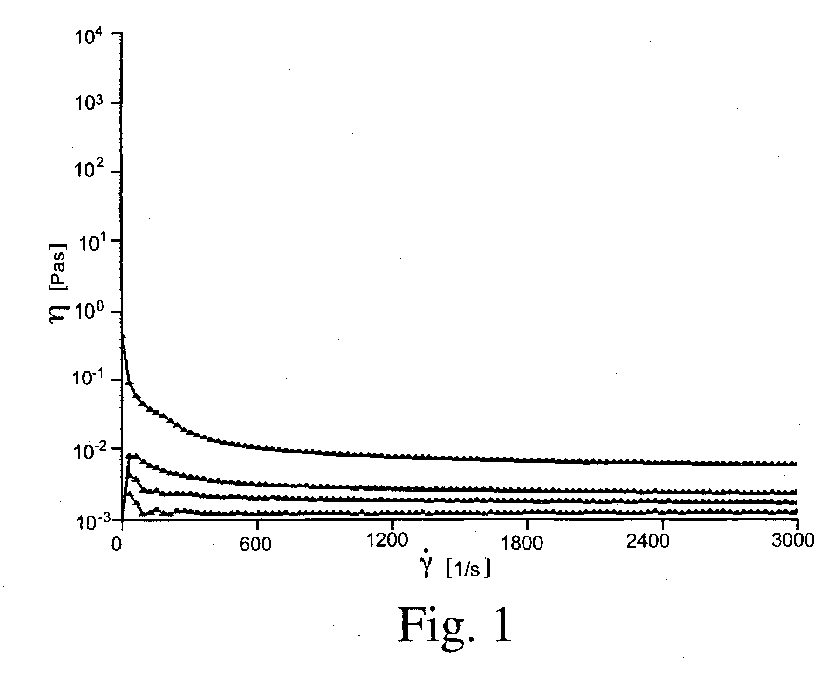

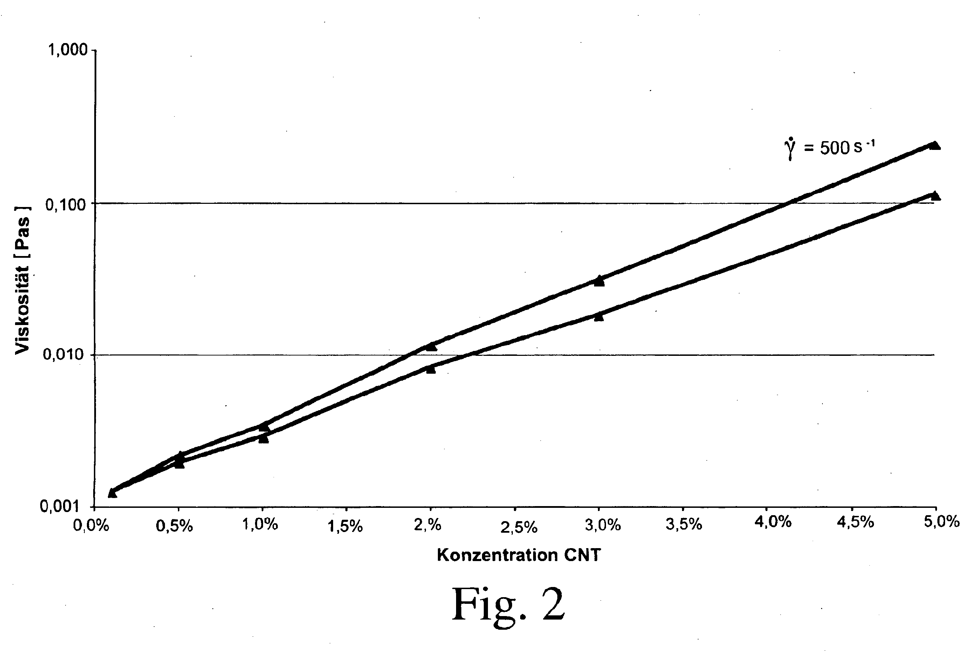

Zur Verdeutlichung des Viskositätsanstiegs mit steigendem Füllgrad an CNTs wurden die Viskositäten unterschiedlicher Dispersionen in PMA mit CNT-Grehalten im Bereich von 0,1 % bis 5 % gemessen (Fig. 1 und Fig. 2), Wie man sieht, steigt die Viskosität exponentiell mit der Konzentration an, bewegt sich aber auch bei Konzentrationen oberhalb von 3 % noch in einem handhabbaren Bereich. Fig. 1 zeigt die Viskositäten von PMA-Dispersionen mit unterschiedlichen Gehalten an CNTs (0,1 %, 0,5 %, 1,0 %, 2,0 %, 3,0 % und 5,0 %, Kurven von unten nach oben betrachtet) bei konstanter Menge an Dispergiermittel von 200 Gew.-% in bezug auf CNTs, und Fig. 2 ist eine entsprechende logarithmische Auftragung der Viskositäten von PMA-Dispersionen mit unterschiedlichen Gehalten an CNTs gegen die Konzentration der CNTs.

### Abhängigkeit der Viskosität vom Anteil an Dispergiermittel

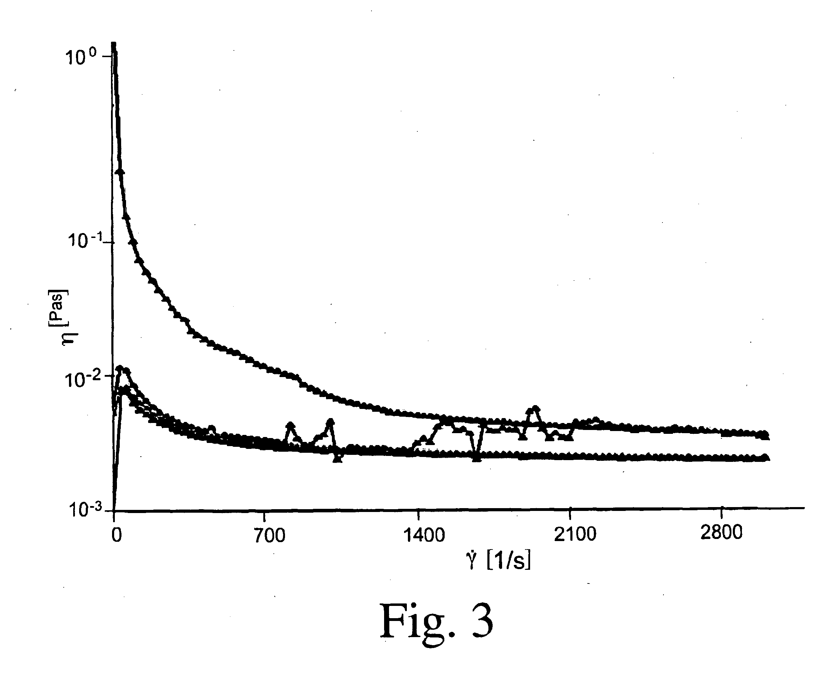

Aufgrund der großen Oberfläche der CNTs und ihrem Drang zu Verknäulen ist ein hoher Dispergiermittelanteil einzusetzen. Es wurden daher Dispergiermittelkonzentrationen von 50 bis 200 Gew.-% (bezogen auf CNTs) eingesetzt. Als Maß für die Dispergierung dient ebenfalls die Viskosität. Aus Fig. 3 erkennt man, daß die Viskosität ab einer Dispergiermittelkonzentration von 150 % unverändert niedrig bleibt. Deutlich geringere Konzentrationen führen zu höheren Viskositäten. Fig. 3 zeigt eine Gegenüberstellung der Viskositäten von 1%igen Dispersionen an CNTs in PMA mit unterschiedlichen Gehalten an DISP-I (50 Gew.-%, 100 Gew.-%, 150 Gew.% und 200 Gew.-%, bezogen auf CNTs, Kurven von oben nach unten betrachtet).

### Vergleich von unterschiedlichen CNTs

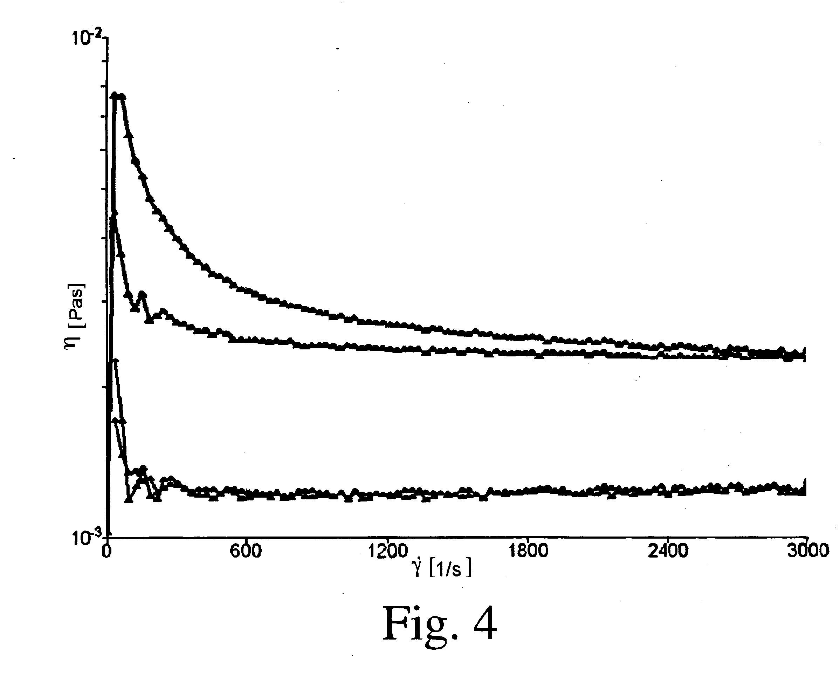

Wie aus Fig. 4 ersichtlich ist, läßt sich das erfindungsgemäße Verfahren zum Dispergieren von CNTs nahezu universell auf unterschiedlichste Arten von CNTs anwenden. Fig. 4 zeigt beispielhaft die Viskositäten von 0,1%igen (untere Kurven) bzw. 1%igen Dispersionen (obere Kurven) von CNTs in PMA, und zwar einerseits für Baytubes^{®} C 150 P der Bayer MaterialScience AG und andererseits CNTs von CNT Co., Ltd.). Man erkennt deutlich, daß die Viskositäten nahezu identisch sind, unabhängig davon von welchem Hersteller die CNTs stammen.

### Zusammenfassung der Ergebnisse

Die vorliegenden Ergebnisse wurden unter Meßbedingungen ermittelt, welche das "Wandgleiten" der Proben "umgehen" und einen Vergleich der niedrig- und hochkonzentrierten CNT-Suspensionen ermöglichen. Die so erhaltenen Meßwerte können zwar nicht als Absolutwerte betrachtet werden, dienen aber als Grundlage für einen empirischen Vergleich der Proben.

Die 0,1%igen bzw. 1,0%igen unstabilisierten Suspensionen ohne Dispergiermittel von Baytubes^{®} in PMA lassen sich aufgrund des Absetzverhaltens nicht vermessen.

Durch das erfindungsgemäße Verfahren lassen sich fließfähige Pasten mit einem Gehalt von mehr als 5 Gew.-% CNTs herstellen.

Von den getesteten Netzmitteln zeigte sich hinsichtlich des Viskositätsniveaus DISP-I am effektivsten.

Mit Zunahme des Festkörpergehaltes der CNTs und bei gleichbleibender Dispergiermittelbelegung (200 Gew.-% DISP-I) steigt die Viskosität exponentiell.

### Meßbedingungen

ThermoHaake RS300 mit elektrischer Temperiereinrichtung UTCE/C
Meßsystem: 35 mm 1° Kegel/Platte-System
Versuchsart: Rotation im CSR-Modus *(Controlled Shear Rate)*
Alle Proben zeigen eine stark ausgeprägte Fließgrenze. Die visuell sensorische Prüfung spiegelte zudem thixotropes bzw. strukturviskoses Probeverhalten wieder.

### Optische Mikroskopiebilder

Um einen Eindruck über den Agglomerationsgrad und die Qualität der Dispersion zu erhalten, wurden mikroskopische Aufnahmen der unterschiedlichen Dispersionen hergestellt. Im folgenden ist eine Auswahl besonders gut und besonders schlecht dispergierter Proben abgebildet.

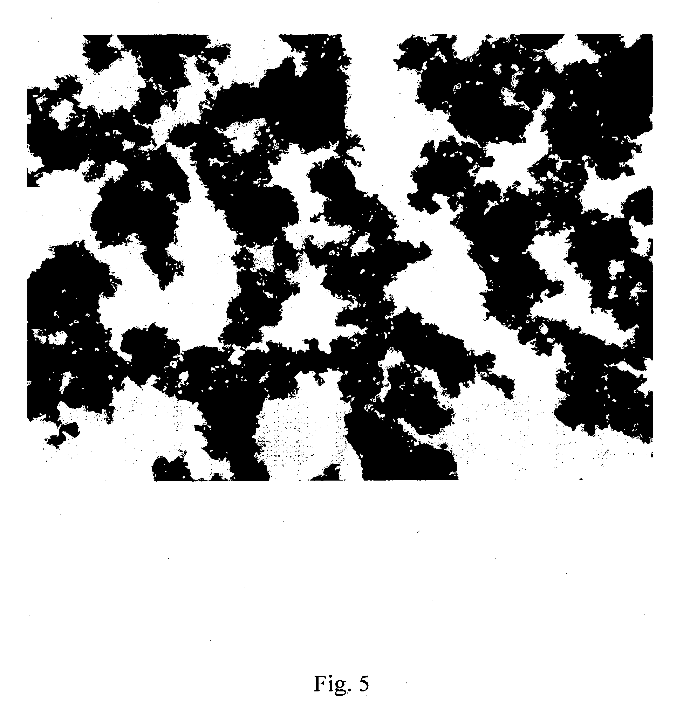

Fig. 5 zeigt eine 10fache Vergrößerung einer 0,1%igen Dispersion von CNTs in PMA nach Ultraschallbehandlung ohne Dispergiermittel (sehr schlechte Dispersion, große Agglomerate).

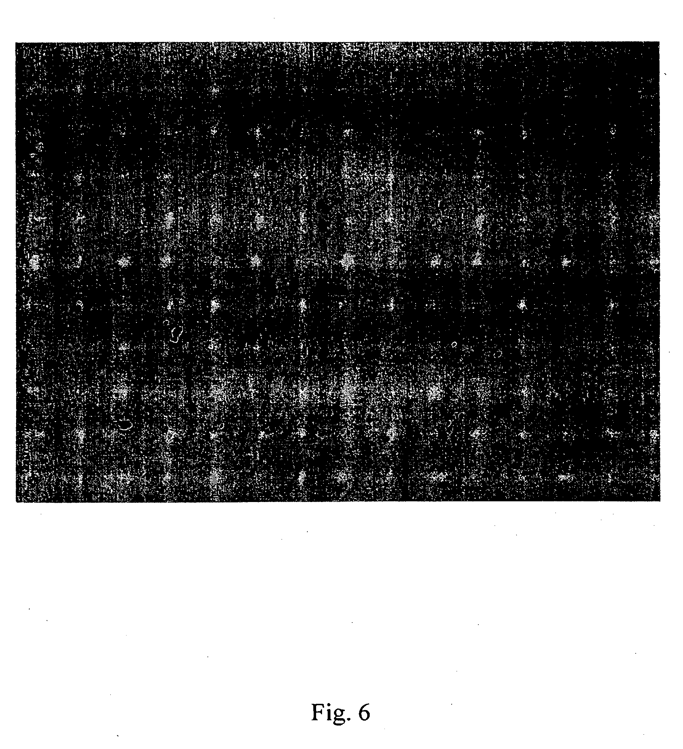

Fig. 6 zeigt eine 10fache Vergrößerung einer 0,1%igen Dispersion von CNTs in PMA nach Ultraschallbehandlung in Gegenwart von 50 % Dispergiermittel (DISP-II) (gute und stabile Dispersion, wenige Agglomerate, deutlich homogen).

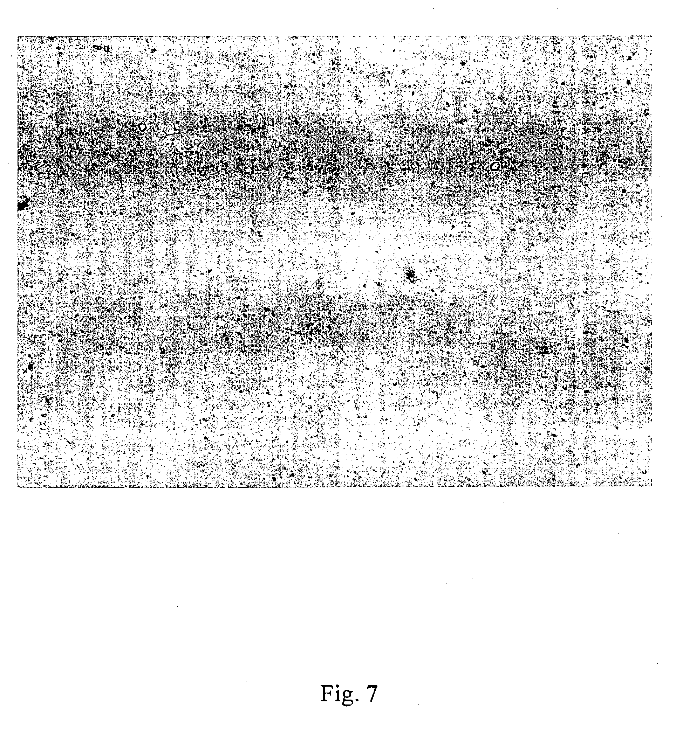

Fig. 7 zeigt eine 10fache Vergrößerung einer 0,1%igen Dispersion von CNT in PMA nach Ultraschallbehandlung in Gegenwart von 100 % Dispergiermittel (DISP-I) (sehr gute und sehr homogene Dispersion, keine großen Agglomerate mehr, stabil).

### Stabilitäten

Die erfindungsgemäß hergestellten Dispersionen sind mittlerweile seit ca. 4 Monaten bei Raumtemperatur stabil und zeigen kein Absetzen der CNTs. Auch Dispersionen mit CNT- Gehalten von 3 % und mehr sind zwar thixotrop, weisen jedoch kein Absetzen der CNTs über einen längeren Zeitraum auf. Anderweitig hergestellte Dispersionen zeigen dagegen häufig bereits nach Stunden eine vollständige Phasentrennung.

## Patentansprüche

1. Verfahren zum Dispergieren von Kohlenstoffnanoröhren (CNTs) in einer kontinuierlichen Phase, insbesondere in mindestens einem Dispersionsmittel,
**dadurch gekennzeichnet,**
**daß** zunächst vor dem eigentlichen Dispergiervorgang ein Verfahrensschritt durchgeführt wird, bei dem die Kohlenstoffnanoröhren (CNTs) mit einer kontinuierlichen Phase, insbesondere einem Dispersionsmittel, und mindestens einem Dispergiermittel (Dispergator) in Kontakt gebracht und homogenisiert werden und
**daß** nachfolgend die Kohlenstoffnanoröhren (CNTs) in der kontinuierlichen Phase, insbesondere dem Dispersionsmittel, in Gegenwart des Dispergiermittels unter Einbringung eines für die Dispergierung ausreichenden Energieeintrags in Mengen von 1 · 10⁻¹ bis 30 Gew.-%, bezogen auf die resultierende Dispersion, dispergiert werden, wobei die eingetragene Energiemenge, berechnet als eingetragene Energie pro Menge an zu dispergierenden Kohlenstoffnanoröhren (CNTs), 15.000 bis 100.000 kJ/kg beträgt.

2. Verfahren nach Anspruch 1, **dadurch gekennzeichnet, daß** die Kohlenstoffnanoröhren (CNTs) in Mengen von 1 · 10⁻¹ bis 20 Gew.%, vorzugsweise 1 · 10⁻¹ bis 10 Gew.-%, besonders bevorzugt 1 · 10⁻¹ bis 7,5 Gew.-%, ganz besonders bevorzugt 1 · 10⁻¹ bis 5 Gew.-%, bezogen auf die resultierende Dispersion, in der kontinuierlichen Phase dispergiert werden.

3. Verfahren nach Anspruch 1 oder 2, **dadurch gekennzeichnet, daß** das Dispergiermittel (Dispergator) in Mengen von 25 bis 400 Gew.-%, insbesondere 50 bis 350 Gew.-%, vorzugsweise 75 bis 300 Gew.-%, besonders bevorzugt 100 bis 275 Gew.-%, ganz besonders bevorzugt 150 bis 250 Gew.-%, bezogen auf die zu dispergierenden Kohlenstoffnanoröhren (CNTs), eingesetzt wird.

4. Verfahren nach einem oder mehreren der vorangehenden Ansprüche, **dadurch gekennzeichnet, daß** das Verfahren bzw. der Dispergiervorgang über eine Zeitdauer von 0,01 bis 30 Minuten, insbesondere 0,1 bis 20 Minuten, vorzugsweise 0,2 bis 15 Minuten, besonders bevorzugt 0,5 bis 10 Minuten, ganz besonders bevorzugt 0,5 bis 5 Minuten, durchgeführt wird und/oder daß der Energieeintrag mittels Ultraschallbehandlung erfolgt und/oder daß die eingetragene Energiemenge, berechnet als eingetragene Energie pro Menge an zu dispergierenden Kohlenstoffnanoröhren (CNTs), 25.000 bis 50.000 kJ/kg beträgt.

5. Verfahren nach einem oder mehreren der vorangehenden Ansprüche, **dadurch gekennzeichnet, daß** der Dispergiervorgang ohne vorangehende Vorbehandlung der zu dispergierenden Kohlenstoffnanoröhren (CNTs), insbesondere ohne vorangehende Oxidation, chemische Behandlung, thermische Behandlung, Polarisierung oder Halogenierung, durchgeführt wird.

6. Verfahren nach einem oder mehreren der vorangehenden Ansprüche, **dadurch gekennzeichnet,**
• **daß** die eingesetzten Kohlenstoffnanoröhren (CNTs) aus einwandigen Kohlenstofnanoröhren (SWCNTs bzw. SWNTs) oder mehrwandigen Kohlenstoffnanoröhren (MWCNTs bzw. MWNTs), insbesondere 2- bis 30wandigen, vorzugsweise 3- bis 15wandigen, Kohlenstoffnanoröhren, ausgewählt werden und/oder
• **daß** die eingesetzten Kohlenstoffhanoröhren (CNTs) mittlere Innendurchmesser von 0,4 bis 50 nm, insbesondere 1 bis 10 nm, vorzugsweise 2 bis 6 nm, aufweisen und/oder
• **daß** die eingesetzten Kohlenstoffnanoröhren (CNTs) mittlere Außendurchmesser von 1 bis 60 mm, insbesondere 5 bis 30 nm, vorzugsweise 10 bis 20 nm, aufweisen und/oder
• **daß** die eingesetzten Kohlenstoffnanoröhren (CNTs) mittlere Längen von 0,01 bis 1.000 µm, insbesondere 0,1 bis 500 µm, vorzugsweise 0,5 bis 200 µm, besonders bevorzugt 1 bis 100 µm, aufweisen und/oder
• **daß** die eingesetzten Kohlenstoffnanoröhren (CNTs) eine Zugfestigkeit pro Kohlenstoffhanoröhre von mindestens 1 GPa, insbesondere mindestens 5 GPa, bevorzugt mindestens 10 GPa, aufweisen und/oder
• **daß** die eingesetzten Kohlenstoffnanoröhren (CNTs) einen Elastizitätsmodul pro Kohlenstoffnanoröhre von mindestens 0,1 TPa, insbesondere mindestens 0,5 TPa, bevorzugt mindestens 1 TPa, aufweisen und/oder
• **daß** die eingesetzten Kohlenstoffnanoröhren (CNTs) eine thermische Leitfähigkeit von mindestens 500 W/mK, insbesondere mindestens 1.000 W/mK, bevorzugt mindestens 2.000 W/mK, aufweisen und/oder
• **daß** die eingesetzten Kohlenstoffnanoröhren (CNTs) eine elektrische Leitfähigkeit von mindestens 10³ S/cm, insbesondere mindestens 0,5 · 10⁴ S/cm, bevorzugt mindestens 10⁴ S/cm, aufweisen und/oder
• **daß** die eingesetzten Kohlenstoffnanoröhren (CNTs) eine Schüttdichte im Bereich von 0,01 bis 0,3 g/cm³, insbesondere 0,02 bis 0,2 g/cm³, vorzugsweise 0,1 bis 0,2 g/cm³, aufweisen.

7. Verfahren nach einem oder mehreren der vorangehenden Ansprüche, **dadurch gekennzeichnet, daß** als kontinuierliche Phase, insbesondere Dispersionsmittel, ein wäßrig, organisch oder wäßrig-organisch basiertes Dispersionsmittel, bevorzugt ein organisches Dispersionsmittel, eingesetzt wird und/oder daß als kontinuierliche Phase ein unter Dispergierbedingungen, insbesondere unter Atmosphärendruck (101,325 kPa) und in einem Temperaturbereich von 10 bis 100 °C, vorzugsweise 15 bis 70 °C, im flüssigen Aggregatzustand vorliegendes Dispersonsmittel eingesetzt wird, insbesondere wobei das Dispersionsionsmittel ausgewählt wird aus der Gruppe von (i) Alkoholen, insbesondere geradkettigen, verzweigten oder cyclischen, einwertigen oder mehrwertigen Alkoholen, wie Methanol, Ethanol, Butanol, Ethylhexanol, Dekanol, Isotridecylalkohol, Benzylalkohol, Propargylalkohol, Oleylalkohol, Linoleylalkohol, Oxoalkoholen, Neopentylalkohol, Cyclohexanol, Fettalkoholen und Di- und Polyolen, wie Glykolen; (ii) Etheralkoholen, wie 2-Methoxyethanol, Monophenyldiglykol, Phenylethanol, Ethylenglykol und Propylenglykol; (iii) Kohlenwasserstoffen, wie Toluol, Xylol und aliphatischen und/oder cyloaliphatischen Benzinfraktionen, chlorierten Kohlenwasserstoffen, wie Chloroform und Trichlorethan; (iv) Ethern, insbesondere cyclischen und acyclischen Ethern, wie cyclischen und acyclischen Ethern, wie Dioxan, Tetrahydrofuran und Polyalkylenglykoldialkylethern; (v) Carbonsäureestern, insbesondere Monocarbonsäureestem, wie Ethylacetat und Butylacetat, und Di- oder Polycarbonsäureestern, wie Dialkylestern von C₂- bis C₄-Dicarbonsäuren ("Dibasic Esters"); (vi) Etherestern, insbesondere Alkylglykolestem, wie Ethylglykolacetat und Methoxypropylacetat; (vii) Lactonen, wie Butyrolacton; (viii) Weichmachern, insbesondere Phthalaten; (ix) Aldehyden und Ketonen, wie Methylisobutylketon, Cyclohexanon und Aceton; (x) Säureamiden, wie Dimethylformamid; (xi) N-Methylpyrrolidon; sowie Mischungen der vorgenannten Dispersionsmittel.

8. Verfahren nach einem oder mehreren der vorangehenden Ansprüche, **dadurch gekennzeichnet, daß** als Dispergiermittel ein polymeres Dispergiermittel, insbesondere auf Basis eines funktionalisierten Polymers, vorzugsweise mit einer zahlenmittleren Molekularmasse von mindestens 500 g/mol, vorzugsweise mindestens 1.000 g/mol, bevorzugt mindestens 2.000 g/mol, eingesetzt wird, insbesondere wobei das Dispergiermittel ausgewählt wird aus der Gruppe von Polymeren und Copolymeren mit funktionellen und/oder pigmentaffinen Gruppen, Alkylammoniumsalzen von Polymeren und Copolymeren, Polymeren und Copolymeren mit sauren Gruppen, Kamm- und Blockcopolymeren, wie Blockcopolymeren mit insbesondere basischen pigmentaffinen Gruppen, gegebenenfalls modifizierten Acrylatblockcopolymeren, gegebenenfalls modifizierten Polyurethanen, gegebenenfalls modifizierten und/oder versalzten Polyaminen, Phosphorsäureestern, Ethoxylaten, Polymeren und Copolymeren mit Fettsäureresten, gegebenenfalls modifizierten Polyacrylaten, wie umgeesterten Polyacrylaten, gegebenenfalls modifizierten Polyestern, wie säurefunktionellen Polyestern, Polyphosphaten sowie deren Mischungen.

9. Dispersionen von Kohlenstoffnanoröhren (CNTs) in einer kontinuierlichen Phase, insbesondere in mindestens einem Dispersionsmittel, erhältlich durch das Verfahren nach einem oder mehreren der vorangehenden Ansprüche.

10. Dispersionen nach Anspruch 9, **dadurch gekennzeichnet, daß** die Dispersionen über mindestens 1 Woche, vorzugsweise mindestens 1 Monat, besonders bevorzugt mindestens 3 Monate, ganz besonders bevorzugt mindestens 6 Monate, lagerstabil sind und daß die Dispersionen bei Raumtemperatur fließfähig sind und daß die Dispersionen newtonisch oder allenfalls thixotrop oder strukturviskos, vorzugsweise newtonisch, sind.

11. Verwendung der Dispersionen nach Anspruch 9 oder 10 im Bereich der Elektronik, insbesondere im Bereich der Computer-, Halbleiter- und Meßtechnik und -industrie oder zur Herstellung von leitenden oder halbleitenden Strukturen, nanoelektrische Strukturen und Vorrichtungen, Transistoren, nichtflüchtigen Speichern, Displays und Bildschirmen und deren Komponenten sowie meßtechnischen und computertechnischen Bauteilen und Komponenten, wie Schaltkreisen, Dioden und dergleichen.

12. Verwendung der Dispersionen nach Anspruch 9 oder 10 in Kunststoffen und Kunststoffmassen, Beschichtungen, Lacken, Farben und Kompositmaterialien.

13. Verwendung der Dispersionen nach Anspruch 9 oder 10 zur Erhöhung der elektrischen Leitfähigkeit und/oder zur Verbesserung der mechanischen Eigenschaften, insbesondere der Festigkeit, vorzugsweise in bezug auf Kunststoffe und Kunststoffmassen, Beschichtungen, Lacken, Farben und Kompositmaterialien, vorzugsweise als Verstärkungsmaterialien.

14. Verwendung der Dispersionen nach Anspruch 9 oder 10 zur Herstellung von Bündeln, Fasern, Matten und anderen zusammenhängenden Strukturen von Kohlenstoffnanoröhren (CNTs).

15. Verwendung der Dispersionen nach Anspruch 9 oder 10 im Bereich der Luft- und Raumfahrttechnik oder im Bereich der Kühltechnik, insbesondere zur Herstellung von Kühlkörpern für verschiedenste Anwendungen, insbesondere für GSM-Basisstationen, als CPU-Kühler oder dergleichen,

## Claims

1. Method for dispersing carbon nanotubes (CNTs) in a continuous phase, in particular in at least a dispersing agent,
**characterised in that**,
a method step is carried out before the actual dispersing process, wherein the carbon nanotubes (CNTs) are brought into contact and homogenised in particular with a dispersing agent and at least a dispersing agent (dispersant) in a continuous phase, and
subsequently the carbon nanotubes (CNTs) are dispersed in the continuous phase, in particular with the dispersant, in the presence of the dispersant, with the application of an energy input that is sufficient for the dispersion in amounts of 1 · 10⁻¹ to 30 wt.-% with respect to the resultant dispersion, wherein the amount of energy applied is the energy introduced per amount of carbon nanotubes (CNTs) to be dispersed i.e. 15,000 to 100,000 kJ/kg.

2. Method according to claim 1, **characterised in that** the carbon nanotubes (CNTs) are dispersed in the continuous phase in amounts of 1 · 10⁻¹ to 20 wt .-%, preferably 1 · 10⁻¹ to 10 wt .-%, particularly preferably 1 · 10⁻¹ to 7.5 wt .-%, very particularly preferably 1 · 10⁻¹ to 5 wt .-%, with respect to the resulting dispersion.

3. Method according to claim 1 or 2, **characterised in that** the dispersing agent (dispersant) is used in the continuous phase in quantities from 25 to 400 wt .-%, in particular from 50 to 350 wt .-%, preferably from 75 to 300 wt .-%, particularly preferably from 100 to 275 wt .-%, most preferably from 150 to 250 wt .-%, with respect to the carbon nanotubes (CNTs) to be dispersed.

4. Method according to one or more of the preceding claims, **characterized in that** the method or the dispersing process is carried out over a period from 0.01 to 30 minutes, particularly from 0.1 to 20 minutes, preferably from 0.2 to 15 minutes, more preferably 0.5 to 10 minutes, very particularly preferably from 0.5 to 5 minutes, and/or that the energy is applied by ultrasonic treatment and/or that the amount of energy applied is calculated as the energy input per amount of carbon nanotubes (CNTs) to be dispersed at 25,000 to 50,000 kJ/kg.

5. Method according to one or more of the preceding claims, **characterised in that** the dispersing process is carried out without prior pre-treatment of the dispersing carbon nanotubes (CNTs) and, in particular, without prior oxidation, chemical treatment, thermal treatment, polarisation or halogenation.

6. Method according to one or more of the preceding claims, **characterised in that**
• the carbon nanotubes (CNTs) are selected from single-walled carbon nanotubes (SWCNTs or SWNTs) or multi-walled carbon nanotubes (MWCNTs or MWNTs), in particular 2 to 30 walled, preferably 3 to 15 walled carbon nanotubes, and/or
• the carbon nanotubes (CNTs) used have an average inner diameter of 0.4 to 50 nm, in particular 1 to 10 nm, preferably 2 to 6 nm, and/or
• the carbon nanotubes (CNTs) used have an average outer diameter of 1 to 60 nm, in particular 5 to 30 nm, preferably 10 to 20 nm, and/or
• the carbon nanotubes (CNTs) used have average lengths of from 0.01 to 1000 µm, particularly 0.1 to 500 µm, preferably from 0.5 to 200 µm, particularly preferably 1 to 100 µm, and/or
• the carbon nanotubes (CNTs) used have a tensile strength per carbon nanotube of at least 1 GPa, in particular at least 5 GPa, preferably at least 10 GPa, and/or
• the carbon nanotubes (CNTs) used have an elastic modulus per carbon nanotube of at least 0.1 TPa, in particular at least 0.5 TPa, preferably at least 1 TPa, and/or
• the carbon nanotubes (CNTs) used have a thermal conductivity of at least 500 W/mK, preferably at least 1,000 W/mK, more preferably at least 2,000 W/mK, and/or
• the carbon nanotubes (CNTs) used have an electrical conductivity of at least 10³ S/cm, in particular at least 0.5 - 10⁴ S/cm, preferably at least 10⁴ S/cm, and/or
• the carbon nanotubes (CNTs) used have a bulk density in the range from 0.01 to 0.3 g/cm³, particularly 0.02 to 0.2 g/cm³, preferably 0.1 to 0.2 g/cm³.

7. Method according to one or more of the preceding claims, **characterised in that**, preferably an organic dispersing agent is used as continuous phase, in particular wherein a dispersing agent in the form of an aqueous organic or aqueous-organic-based dispersing agent is used, and/or that a dispersing agent present in the liquid aggregation state is used as continuous phase under dispersing conditions, especially at atmospheric pressure (101,325 kPa) and at a temperature range between 10 to 100°C, preferably 15 to 70°C, in particular wherein the dispersing agent is selected from the group of (i) alcohols, in particular straight-chain, branched or cyclic, monohydric or polyhydric alcohols) such as methanol, ethanol, butanol, ethyl hexanol, decanol, isotridecyl alcohol, benzyl alcohol, propargyl alcohol, oleyl alcohol linoleyl, oxo alcohol, neopentyl, cyclohexanol, fatty alcohols and di- and polyols such as glycols; (ii) ether alcohols such as 2-methoxyethanol, monophenyl di-glycol, phenyl ethanol, ethylene glycol and propylene glycol; (iii) hydrocarbons such as toluene, xylene and aliphatic and/or cycloaliphatic petroleum fractions, chlorinated hydrocarbons such as trichloroethane and chloroform; (iv) ethers, in particular cyclic and acyclic ethers, such as cyclic and acyclic ethers, such as dioxane, tetrahydrofuran and polyalkylene glycol dialkyl ethers; (v) carboxylic acid esters, in particular monocarbonic acid esters such as ethyl acetate and butyl acetate, and di- or polycarboxylic acid esters, such as dialkyl esters of dicarboxylic acids C₂ to C₄ dicarbonic acid esters (dibasic esters); (vi) ether esters, in particular alkyl glycol esters such as ethylglycol acetate and methoxypropyl acetate; (vii) lactones such as butyrolactone; (viii) plasticisers, in particular phthalates, (ix) aldehydes and ketones, such as methyl isobutyl ketone, cyclohexanone and acetone; (x) acid amides, such as dimethylformamide; (xi) N-methylpyrrolidone; and mixtures of the above-mentioned dispersing agents,

8. Method according to one or more of the preceding claims **characterised in that** the dispersant used is a polymeric dispersant, in particular on the basis of a functionalised polymer, preferably having an average molecular weight of at least 500 g/mol, preferably at least 1,000 g/mol, more preferably at least 2,000 g/mol, in particular wherein the dispersant is selected from the group of polymers and copolymers with functional and/or pigment affinic groups, alkylammonium salts of polymers and copolymers, polymers and copolymers with acidic groups, comb block copolymers such as block copolymers with particular basic pigment affinic groups, modified or unmodified acrylic block copolymers, optionally modified polyurethanes, optionally modified and/or salified polyamines, phosphoric acid esters, ethoxylates, polymers and copolymers with fatty acid residues, optionally modified polyacrylates such as interesterified polyacrylates, modified or unmodified polyesters such as acid functional polyesters, polyphosphates and mixtures thereof.

9. Dispersions of carbon nanotubes (CNTs) in continuous phase, in particular in at least one dispersing agent, obtainable by the process according to one or more of the preceding claims.

10. Dispersions according to claim 9, **characterised in that** the dispersions are stable in storage for at least 1 week, preferably at least 1 month, more preferably at least 3 months, most preferably at least 6 months, and that the dispersions are flowable at room temperature and that the dispersions are Newtonian, or at most thixotropic or structurally viscous, preferably Newtonian.

11. Use of the dispersions according to claim 9 or 10 in the field of electronics, in particular in the field of computers, semiconductors and metrology and/or for the production of conductive or semi-conductive structures, nanoelectronic structures and devices, transistors, non-volatile memories, displays and screens and their components as well as metrological and computer-technical parts and components, such as circuits, diodes and the like.

12. Use of the dispersions according to claim 9 or 10 in plastics and plastic mass', coatings, paints, inks and composites.

13. Use of the dispersions according to claim 9 or 10 for increasing electrical conductivity and/or improving mechanical properties, especially the strength, preferably, with respect to plastics and plastic mass', coatings, paints, inks and composites, preferably as reinforcement materials

14. Use of the dispersions according to claim 9 or 10 for the manufacture of bundles, fibres, mats and other related structures of carbon nanotubes (CNTs).

15. Use of the dispersions according to claim 10 or 9 in the field of air and space technology or in the field of cooling technology, in particular for the production of cooling bodies for various applications, in particular for GSM base stations, CPU coolers or the like.

## Revendications

1. Procédé de dispersion de nanotubes de carbone (CNT) dans une phase continue, notamment dans au moins un milieu de dispersion,
**caractérisé en ce qu'**une étape de procédé est tout d'abord réalisée avant le processus de dispersion propre, lors de laquelle les nanotubes de carbone (CNT) sont mis en contact avec une phase continue, notamment un milieu de dispersion, et au moins un agent de dispersion (dispersant) et homogénéisés, et
**en ce que** les nanotubes de carbone (CNT) sont ensuite dispersés dans la phase continue, notamment le milieu de dispersion, en présence de l'agent de dispersion avec introduction d'un apport d'énergie suffisant pour la dispersion en quantités de 1·10⁻¹ à 30 % en poids, par rapport à la dispersion résultante, la quantité d'énergie introduite, calculée en tant qu'énergie introduite par quantité de nanotubes de carbone (CNT) à disperser, étant de 15 000 à 100 000 kJ/kg.

2. Procédé selon la revendication 1, **caractérisé en ce que** les nanotubes de carbone (CNT) sont dispersés en quantités de 1·10⁻¹ à 20 % en poids, de préférence de 1·10⁻¹ à 10 % en poids, de manière particulièrement préférée de 1·10⁻¹ à 7,5 % en poids, de manière tout particulièrement préférée de 1·10⁻¹ à 5% en poids, par rapport à la dispersion résultante, dans la phase continue.

3. Procédé selon la revendication 1 ou 2, **caractérisé en ce que** l'agent de dispersion (dispersant) est utilisé en quantités de 25 à 400 % en poids, notamment de 50 à 350 % en poids, de préférence de 75 à 300 % en poids, de manière particulièrement préférée de 100 à 275 % en poids, de manière tout particulièrement préférée de 150 à 250 % en poids, par rapport aux nanotubes de carbone (CNT) à disperser.

4. Procédé selon une ou plusieurs des revendications précédentes, **caractérisé en ce que** le procédé ou le processus de dispersion est réalisé en une durée de 0,01 à 30 minutes, notamment de 0,1 à 20 minutes, de préférence de 0,2 à 15 minutes, de manière particulièrement préférée de 0,5 à 10 minutes, de manière tout particulièrement préférée de 0,5 à 5 minutes, et/ou **en ce que** l'apport d'énergie a lieu au moyen d'un traitement par ultrasons, et/ou **en ce que** la quantité d'énergie introduite, calculée en tant qu'énergie introduite par quantité de nanotubes de carbone (CNT) à disperser, est de 25 000 à 50 000 kJ/kg.

5. Procédé selon une ou plusieurs des revendications précédentes, **caractérisé en ce que** le processus de dispersion est réalisé sans prétraitement préalable des nanotubes de carbone (CNT) à disperser, notamment sans oxydation, traitement chimique, traitement thermique, polarisation ou halogénation préalable.

6. Procédé selon une ou plusieurs des revendications précédentes, **caractérisé en ce que**
- les nanotubes de carbone (CNT) utilisés sont choisis parmi les nanotubes de carbone monoparois (SWCNT ou SWNT) ou les nanotubes de carbone multiparois (MWCNT ou MWNT), notamment les nanotubes de carbone ayant 2 à 30 parois, de préférence 3 à 15 parois, et/ou
- les nanotubes de carbone (CNT) utilisés présentent un diamètre intérieur moyen de 0,4 à 50 nm, notamment de 1 à 10 nm, de préférence de 2 à 6 nm, et/ou
- les nanotubes de carbone (CNT) utilisés présentent un diamètre extérieur moyen de 1 à 60 nm, notamment de 5 à 30 nm, de préférence de 10 à 20 nm, et/ou
- les nanotubes de carbone (CNT) utilisés présentent des longueurs moyennes de 0,01 à 1 000 µm, notamment de 0,1 à 500 µm, de préférence de 0,5 à 200 µm, de manière particulièrement préférée de 1 à 100 µm, et/ou
- les nanotubes de carbone (CNT) utilisés présentent une résistance à la traction par nanotube de carbone d'au moins 1 GPa, notamment d'au moins 5 GPa, de préférence d'au moins 10 GPa, et/ou
- les nanotubes de carbone (CNT) utilisés présentent un module d'élasticité par nanotube de carbone d'au moins 0,1 TPa, notamment d'au moins 0,5 TPa, de préférence d'au moins 1 TPa, et/ou
- les nanotubes de carbone (CNT) utilisés présentent une conductivité thermique d'au moins 500 W/mK, notamment d'au moins 1 000 W/mK, de préférence d'au moins 2 000 W/mK, et/ou
- les nanotubes de carbone (CNT) utilisés présentent une conductivité électrique d'au moins 10³ S/cm, notamment d'au moins 0,5·10⁴ S/cm, de préférence d'au moins 10⁴ S/cm, et/ou
- les nanotubes de carbone (CNT) utilisés présentent une densité apparente dans la plage allant de 0,01 à 0,3 g/cm³, notamment de 0,02 à 0,2 g/cm³, de préférence de 0,1 à 0,2 g/cm³.

7. Procédé selon une ou plusieurs des revendications précédentes, **caractérisé en ce qu'**un milieu de dispersion à base aqueuse, organique ou aqueuse-organique, de préférence un milieu de dispersion organique, est utilisé en tant que phase continue, notamment milieu de dispersion, et/ou **en ce qu'**un milieu de dispersion qui se présente à l'état d'agrégation liquide dans les conditions de dispersion, notamment à une pression atmosphérique (101,325 kPa) et dans une plage de température allant de 10 à 100 °C, de préférence de 15 à 70 °C, est utilisé en tant que phase continue, le milieu de dispersion étant notamment choisi dans le groupe constitué par (i) les alcools, notamment les alcools monovalents ou polyvalents linéaires, ramifiés ou cycliques, tels que le méthanol, l'éthanol, le butanol, l'éthylhexanol, le décanol, l'alcool isotridécylique, l'alcool benzylique, l'alcool propargylique, l'alcool oléylique, l'alcool linoléylique, les oxo-alcools, l'alcool néopentylique, le cyclohexanol, les alcools gras et les di- et polyols, tels que les glycols ; (ii) les éther-alcools, tels que le 2-méthoxyéthanol, le monophényldiglycol, le phényléthanol, l'éthylène glycol et le propylène glycol ; (iii) les hydrocarbures, tels que le toluène, le xylène et les fractions d'essence aliphatiques et/ou cycloaliphatiques, les hydrocarbures chlorés, tels que le chloroforme et le trichloroéthane ; (iv) les éthers, notamment les éthers cycliques et acycliques, tels que le dioxane, le tétrahydrofurane et les éthers dialkyliques de polyalkylène glycol ; (v) les esters d'acides carboxyliques, notamment les esters d'acides monocarboxyliques, tels que l'acétate d'éthyle et l'acétate de butyle, et les esters d'acides di- ou polycarboxyliques, tels que les esters dialkyliques d'acides dicarboxyliques en C₂ à C₄ (« esters dibasiques ») ; (vi) les éther-esters, notamment les esters d'alkylglycol, tels que l'acétate d'éthylglycol et l'acétate de méthoxypropyle ; (vii) les lactones, telles que la butyrolactone ; (viii) les plastifiants, notamment les phtalates ; (ix) les aldéhydes et les cétones, tels que la méthylisobutylcétone, la cyclohexanone et l'acétone ; (x) les amides d'acides, tels que le diméthylformamide ; (xi) la N-méthylpyrrolidone ; ainsi que les mélanges des milieux de dispersion susmentionnés.

8. Procédé selon une ou plusieurs des revendications précédentes, **caractérisé en ce qu'**un agent de dispersion polymère, notamment à base d'un polymère fonctionnalisé, de préférence ayant une masse moléculaire moyenne en nombre d'au moins 500 g/mol, avantageusement d'au moins 1 000 g/mol, de préférence d'au moins 2 000 g/mol, est utilisé en tant qu'agent de dispersion, l'agent de dispersion étant notamment choisi dans le groupe constitué par les polymères et les copolymères contenant des groupes fonctionnels et/ou présentant une affinité avec les pigments, les sels d'alkylammonium de polymères et de copolymères, les polymères et les copolymères contenant des groupes acides, les copolymères en peigne et séquencés, tels que les copolymères séquencés contenant des groupes présentant une affinité avec les pigments, notamment basiques, les copolymères séquencés d'acrylate éventuellement modifiés, les polyuréthanes éventuellement modifiés, les polyamines éventuellement modifiées et/ou salifiées, les esters de l'acide phosphorique, les éthoxylates, les polymères et les copolymères avec des esters d'acides gras, les polyacrylates éventuellement modifiés, tels que les polyacrylates transestérifiés, les polyesters éventuellement modifiés, tels que les polyesters à fonction acide, les polyphosphates, ainsi que leurs mélanges.

9. Dispersions de nanotubes de carbone (CNT) dans une phase continue, notamment dans au moins un milieu de dispersion, pouvant être obtenues par le procédé selon une ou plusieurs des revendications précédentes.

10. Dispersions selon la revendication 9, **caractérisées en ce que** les dispersions sont stables au stockage pendant au moins 1 semaine, de préférence au moins 1 mois, de manière particulièrement préférée au moins 3 mois, de manière tout particulièrement préférée au moins 6 mois, et **en ce que** les dispersions sont fluides à température ambiante, et **en ce que** les dispersions sont newtoniennes ou éventuellement thixotropiques ou pseudo-plastiques, de préférence newtoniennes.

11. Utilisation des dispersions selon la revendication 9 ou 10 dans le domaine électronique, notamment dans le domaine des technologies et des industries informatiques, des semi-conducteurs et des mesures ou pour la fabrication de structures conductrices ou semi-conductrices, de structures et de dispositifs nano-électriques, de transistors, de mémoires non volatiles, de visualisateurs et d'écrans et leurs composants, ainsi que de constituants et de composants métrologiques et informatiques, tels que des circuits de commutation, des diodes et analogues.

12. Utilisation des dispersions selon la revendication 9 ou 10 dans des plastiques et des matériaux plastiques, des revêtements, des vernis, des peintures et des matériaux composites.

13. Utilisation des dispersions selon la revendication 9 ou 10 pour augmenter la conductivité électrique et/ou pour améliorer les propriétés mécaniques, notamment la solidité, de préférence de plastiques et de matériaux plastiques, de revêtements, de vernis, de peintures et de matériaux composites, de préférence en tant que matériaux renforçants.

14. Utilisation des dispersions selon la revendication 9 ou 10 pour la fabrication de faisceaux, de fibres, de mats et d'autres structures cohérentes de nanotubes de carbone (CNT).

15. Utilisation des dispersions selon la revendication 9 ou 10 dans le domaine des technologies aériennes et astronautiques ou dans le domaine des technologies de réfrigération, notamment pour la fabrication de corps réfrigérants pour diverses applications, notamment pour stations de base GSM, en tant que refroidisseurs d'unités centrales ou analogues.
